# EUROPÄISCHE PATENTSCHRIFT

(11) **EP 2 935 142 B1**
(45) Veröffentlichungstag und Bekanntmachung des Hinweises auf die Patenterteilung: **12.10.2016**
(21) Anmeldenummer: 13818711.7
(22) Anmeldetag: 16.12.2013
(51) Int. Cl.: C04B 24/26, C04B 40/00, C08F 261/04, C08K 5/5415, C08L 51/00

(54) **VERWENDUNG VON HYBRIDCOPOLYMEREN ALS SCHUTZKOLLOIDE FÜR POLYMERE**
USE OF HYBRID COPOLYMERS AS PROTECTIVE COLLOIDS FOR POLYMERS
UTILISATION DE COPOLYMÈRES HYBRIDES COMME COLLOÏDES PROTECTEURS POUR DES POLYMÈRES

(30) Priorität: 18.12.2012 DE 102012223620
(43) Veröffentlichungstag der Anmeldung: 28.10.2015
(73) Patentinhaber: Wacker Chemie AG, 81737 München (DE)
(72) Erfinder: HASHEMZADEH, Abdulmajid, 84489 Burghausen (DE)
(74) Vertreter: Ege, Markus
(86) Internationale Anmeldenummer: PCT/EP2013/076700
(87) Internationale Veröffentlichungsnummer: WO 2014/095718

(56) Entgegenhaltungen:
- EP-A1- 1 948 707
- DE-A1-102007 038 333
- DE-A1-102011 004 361
- US-A1- 2003 044 611

## Beschreibung

Die vorliegende Erfindung betrifft die Verwendung von Hybridcopolymeren als Schutzkolloide zur Herstellung von Polymeren auf Basis ethylenisch ungesättigter Monomere in Form von in Wasser redispergierbaren Pulvern und deren Verwendung beispielsweise in der Baustoffindustrie.

Schutzkolloide finden vielfältigste Anwendungen für die Stabilisierung von Polymeren, beispielsweise bei der Dispergierung von Polymeren in Wasser. So werden Schutzkolloide als Stabilisierungsmittel bei der Herstellung von Polymeren während der Polymerisation von ethylenisch ungesättigten Monomeren eingesetzt. Schutzkolloide werden auch als Trocknungshilfsmittel bei der Überführung von Polymerdispersionen in entsprechende in Wasser redispergierbare Pulver, auch als Dispersionspulver (DPP) bezeichnet, verwendet. An Schutzkolloid-stabilisierte Systeme werden vielfältige Anforderungen gestellt. Beispielsweise sollen derartige Systeme lagerstabil sein. Insbesondere gilt es, Dispersionspulver so auszustatten, dass diese auch nach Lagerung unter Druck- oder Temperatur-Beanspruchung rieselfähig (blockstabil) und in Wasser redispergierbar bleiben. Zu diesen Zwecken wurden den Polymeren bisher relativ große Mengen an Schutzkolloiden oder inerten Substanzen zugesetzt. So wird in der EP-A 632096 die Sprühtrocknung von wässrigen Vinylester-Polymerisaten in Gegenwart von Polyvinylalkohol als Verdüsungsschutzkolloid beschrieben. Aus der EP-A 78449 ist bekannt, die Sprühtrocknung unter Zusatz von Naphthalinsulfonsäure-Formaldehyd-Kondensationsprodukten durchzuführen. Die EP-A 407889 beschreibt die Sprühtrocknung von wässrigen Polymerdispersionen in Gegenwart von Phenolsulfonsäure-Formaldehyd-Kondensationsprodukten. Aus der EP-A 134451 ist die Herstellung von Dispersionspulvern durch Sprühtrocknung wässriger Dispersionen in Gegenwart von Stärken oder Proteinen bekannt.

Der Zusatz gängiger Schutzkolloide zu Polymeren bringt aber eine Reihe von Nachteilen mit sich. Gängige Schutzkolloide sind teuer und müssen zudem in relativ großen Mengen zugesetzt werden, um eine ausreichende Lagerstabilität, insbesondere eine Redispergierbarkeit bzw. Blockfestigkeit der Polymerdispersionen bzw. Dispersionspulver sicherzustellen. Ein höherer Schutzkolloid-Gehalt der Polymerzusammensetzungen führt aber zwangsläufig zu einem niedrigeren Anteil der Basispolymere und damit der eigentlich als Wirkstoff, beispielsweise als Bindemittel, fungierenden Komponente. Zudem können insbesondere hohe Schutzkolloid-Anteile die anwendungstechnischen Eigenschaften der Polymerzusammensetzungen negativ beeinflussen, wie beispielsweise die rheologischen Eigenschaften entsprechender Polymerdispersionen oder Polymer-Redispersionen.

In einem alternativen Ansatz zur Ausstattung von Dispersionspulvern mit blockfesten Eigenschaften werden die Basispolymere mit anorganischen Partikeln, beispielsweise Silikateilchen, umhüllt (Pickering-Technologie) - wie in der US20080220176 beschrieben. Die so erhältlichen Dispersionspulver besitzen zwar eine befriedigende Blockstabilität und Wasserbeständigkeit, jedoch eine unzureichende Redispergierbarkeit in Wasser, da die anorganischen Partikel in Folge der Trocknung agglomerieren. Das Redispergieren agglomerierter anorganischer Partikel ist technisch schwierig und zumindest aufwändig. Die US20080220176 empfiehlt zur Redispergierung den Einsatz von Ultraschall. In den gängigen Anwendungen, wie in mineralischen Baustoffmassen, führen entsprechende Dispersionspulver zu nachteiligen anwendungstechnischen Eigenschaften, deren Kompensation wiederum den Zusatz weiterer spezieller Additive erforderlich macht.

Vor diesem Hintergrund bestand die Aufgabe, Maßnahmen zur Stabilisierung von Polymeren bereitzustellen, mit denen die oben genannten Nachteile überwunden werden können. Insbesondere sollten Polymere in Form von in Wasser redispergierbaren Pulvern (Dispersionspulver) zugänglich werden, die blockfest und zudem gut in Wasser redispergierbar und nach Möglichkeit darüber hinaus in einer Umgebung mit relativ hoher Luftfeuchtigkeit lagerstabil sein sollen. Schließlich sollten entsprechend stabilisierte Polymere nach Möglichkeit geringere Mengen an Schutzkolloiden enthalten als herkömmlich stabilisierte Polymere.

Die Aufgabe wurde überraschender Weise durch den Einsatz von Hybridcopolymeren als Schutzkolloide gelöst, die erhältlich waren, indem ethylenisch ungesättigte Monomere, insbesondere wasserunlösliche ethylenisch ungesättigte Monomere, in Gegenwart von herkömmlichen Schutzkolloiden radikalisch polymerisiert wurden. Auf diese Weise werden Hybridcopolymere erhalten, die aus herkömmlichen Schutzkolloid-Einheiten sowie Polymer-Einheiten von den ethylenisch ungesättigten, vorzugsweise wasserunlöslichen, Monomeren aufgebaut sind. Die unterschiedlichen Polymer-Einheiten können chemisch, beispielsweise über ein oder mehrere kovalente Bindungen, oder auch physikalisch, beispielsweise über ionische Wechselwirkungen, miteinander verknüpft sein. Die kovalenten Bindungen können beispielsweise durch Pfropfung der herkömmlichen Schutzkolloide im Zuge der radikalischen Polymerisation der ethylenisch ungesättigten Monomere entstehen. Alternative Hybridcopolymere werden erhalten, indem Silane oder Siliciumoxide in Gegenwart der in der vorgenannten radikalischen Polymerisation erhaltenen Produkte kondensiert werden.

Die US 2003/0044611 empfiehlt den Einsatz von Silan-modifizierten Polyvinylacetalen als Schutzkolloid für Polymere. Die WO-A 2014/069616 offenbart Hybridcopolymere hergestellt mittels radikalischer Polymerisation von beispielsweise Vinylacetat in Gegenwart von Polyvinylalkohol sowie die Verwendung solcher Hybridcopolymere für die Polymerisation von ethylenisch ungesättigten Monomeren. Auch die JP-A 2005 082665 lehrt die Herstellung von Hybridcopolymeren durch radikalische Polymerisation von ethylenisch ungesättigten Monomeren in Gegenwart von wasserlöslichen Polymeren und die Verwendung von Hybridcopolymeren als Schutzkolloid für die Polymerisation von ethylenisch ungesättigten Monomeren in wässrigem Medium.

Die DE-A 10 2005 054 913 beschreibt Silan-modifizierte Polyvinylalkohole erhältlich durch radikalisch initiierte Pfropfpolymerisation von ethylenisch ungesättigten, Silan-haltigen Monomeren und gegebenenfalls weiteren funktionellen Comonomeren. Auch die EP1948707 befasst sich mit der Behandlung von Vinylalkoholpolymerisaten mit ethylenisch ungesättigten, silanhaltigen Monomeren zur Herstellung von Silan-modifizierten Polyvinylalkoholen. Die DE 10 2007 038 333 kondensiert Silane in einem wässrigen Lösungsmittel unter Mischen mit wasserlöslichen Polymeren. Die DE 10 2011 004 361 beschreibt modifizierte Kompositpartikel erhältlich durch Kondensation von feinteiligen anorganischen Feststoffen und organischen Polymeren in einem Lösungsmittel, wobei in einem weiteren Schritt in Gegenwart der Kondensationsprodukte ethylenisch ungesättigte Monomere polymerisiert werden.

Gegenstand der Erfindung ist die Verwendung von Hybridcopolymeren als Schutzkolloide zur Herstellung von Polymeren auf Basis ethylenisch ungesättigter Monomere (Basispolymere) in Form von in Wasser redispergierbaren Pulvern, dadurch gekennzeichnet,
dass Hybridcopolymere als Trocknungshilfsmittel zu Basispolymeren in Form von wässrigen Dispersionen gegeben werden und die so erhaltenen Mischungen anschließend getrocknet werden, wobei die Hybridcopolymere erhältlich sind durch A) radikalisch initiierte Polymerisation von einem oder mehreren, vorzugsweise wasserunlöslichen, ethylenisch ungesättigten Monomeren a) ausgewählt aus der Gruppe bestehend aus Vinylacetat, Vinylpropionat, Vinylbutyrat, Vinyl-2-ethylhexanoat, Vinyllaurat, 1-Methylvinylacetat, Vinylpivalat, Vinylester von alpha-verzweigten Monocarbonsäuren mit 5 bis 13 C-Atomen,
Methylacrylat, Methylmethacrylat, Ethylacrylat, Ethylmethacrylat, Propylacrylat, Propylmethacrylat, Butylacrylat, Butylmethacrylat, 2-Ethylhexylacrylat, Norbornylacrylat, Laurylacrylat, Laurylmethacrylat, Stearylacrylat, Stearylmethacrylat, 2-Propylheptylacrylat, iso-Tridecylmethacrylat, Dihydrodicyclopentadienylacrylat,
Ethylen, Propylen, 1,3-Butadien, Styrol, Methylstyrol, Vinyltoluol, Vinylchlorid,
2-Dimethylaminoethylmethacrylat, 3-Dimethylaminopropylmethacrylamid, N-(l,l-Dimethyl-3-dimethylaminopropyl)acrylamid, N-(1,1-Dimethyl-3-dimethylaminobutyl)acrylamid, N-(1-Methyl-1,3diphenyl-3-diethyl-aminopropyl)methacrylamid, 1-Vinylimidazol, 1-Vinyl-2-methylimidazol, 1-Vinyl-2-ethylimidazol, 1-Vinyl-2-phenylimidazol, 1-Vinyl-2,3-dimethylimidazol, 1-Vinyl-2,4,5-trimethylimidazol,
Diallyldiethylammoniumchlorid, (3-Methacryloxy)propyltrimethylammoniumchlorid, (3-Methacryloxy)ethyltrimethylammoniumchlorid, (3-Methacrylamido)propyltrimethyl-ammoniumchlorid, Trimethyl-3-(1-acrylamido-1,1-dimethylpropyl)ammoniumchlorid, Trimethyl-3-(1-acrylamido-1,1-dimethylbutyl)ammoniumchlorid, Dimethylacryl-amidopropyl-4-trimethylammoniumbutenyl-2-ammoniumchlorid, 2-Acrylamidomethoxy)ethyltrimethylammoniumchlorid und Diallyldimethylammoniumchlorid, und
gegebenenfalls einem oder mehreren Silanen b) ausgewählt aus der Gruppe der ethylenisch ungesättigten Silane und Mercaptosilane
in Gegenwart von einem oder mehreren wasserlöslichen Polymeren c),
wobei die wasserlöslichen Polymere c) in Stufe A) zu 20 bis 95 Gew.-% eingesetzt werden, bezogen auf das Gesamtgewicht der bei der Polymerisation in Stufe A) eingesetzten Menge an wasserlöslichen Polymeren c) und ethylenisch ungesättigten Monomeren a).

Alternative Hybridcopolymere sind erhältlich, indem in Gegenwart von einem oder mehreren Produkten aus der Stufe A) in einer weiteren Stufe B) ein oder mehrere Siliciumverbindungen der allgemeinen Formel (RO)ₙSiR¹₄₋ₙ (1) oder ein oder mehrere Kondensationsprodukte der Formel (1) kondensiert werden, wobei
R einen gegebenenfalls substituierten Alkyl- oder Arylrest mit 1 bis 20 Kohlenstoffatomen oder ein Wasserstoffatom,
R¹ einen gegebenenfalls substituierten Kohlenwasserstoffrest oder ein Wasserstoffatom bedeutet, und
n einen Wert von 1 bis 4 annimmt.

Für die Herstellung der Hybridcopolymere in Stufe A) werden 20 bis 95 Gew.-%, vorzugsweise 25 bis 90 Gew.-% und besonders bevorzugt 30 bis 80 Gew.-% wasserlösliche Polymere c) eingesetzt, bezogen auf das Gesamtgewicht der bei der Polymerisation in Stufe A) eingesetzten Mengen an wasserlöslichen Polymeren c) und ethylenisch ungesättigten Monomeren a).

Im Zuge der Herstellung der Hybridcopolymere werden MonomerEinheiten der Monomere a) und gegebenenfalls Silane b) sowie gegebenenfalls die Siliciumverbindungen der Formel (1) oder gegebenenfalls Kondensationsprodukte der Siliciumverbindungen der Formel (1) an die wasserlöslichen Polymere c) fixiert. Eine chemische Fixierung erfolgt hierbei im Allgemeinen durch Pfropfung der wasserlöslichen Polymere c) mit den Monomeren a) und etwaigen Silanen b) oder durch die Kondensation in Stufe B). Bei der Kondensation entstehen vorzugsweise Ketten aus Si-O-Wiederholungseinheiten, die schließlich über kovalente Bindungen an die wasserlöslichen Polymere c) gebunden sind. Alternativ können die in Stufe B) gebildeten bzw. eingesetzten Kondensationsprodukte basierend auf Siliciumverbindungen der Formel (1) auch auf die Polymer-Einheiten aus den Monomeren a) und etwaigen Silanen b) fixiert sein. Diese Fixierung ist besonders ausgeprägt, wenn in Stufe A) Silane b) eingesetzt werden. Eine physikalische Wechselwirkung beruht im Allgemeinen auf ionischen Wechselwirkungen, insbesondere beim Einsatz von ionischen Monomeren a) oder ionischen wasserlöslichen Polymeren c), wie kationischen wasserlöslichen Polymeren c) und den Kondensationsprodukten basierend auf Siliciumverbindungen der Formel (1). In Folge ihrer Herstellung handelt es sich bei den Hybridcopolymeren also nicht um bloße Abmischungen aus den wasserlöslichen Polymeren c) und Polymeren aus den Monomeren a) und etwaigen Silanen b) bzw. etwaigen Kondensationsprodukten aus Stufe B).

Bei den Monomeren a) handelt es sich vorzugsweise um wasserunlösliche ethylenisch ungesättigte Monomeren. Die wasserunlöslichen ethylenisch ungesättigten Monomere a) weisen unter Normalbedingungen nach DIN50014 in Wasser im Allgemeinen eine Löslichkeit von ≤ 40 g/l und bevorzugt ≤ 25 g/l auf. Im Falle von flüssigen Monomeren a) ist wasserunlöslich so zu verstehen, dass Wasser und Monomere a) unter Normalbedingungen nach DIN50014 ein zweiphasiges flüssiges Gemisch ausbilden. Die Monomere a) sind auch dadurch charakterisiert, dass Homopolymere von Monomeren a) unter Normalbedingungen nach DIN50014 eine Löslichkeit in Wasser von vorzugsweise < 10 g/l, besonders bevorzugt < 5 g/l und am meisten bevorzugt < 1 g/l haben.

Als Monomere a) geeignete Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9R oder VeoVa10R (Handelsnamen der Firma Shell). Besonders bevorzugt ist Vinylacetat.

Geeignete Methacrylsäureester oder Acrylsäureester sind Methylacrylat, Methylmethacrylat, Ethylacrylat, Ethylmethacrylat, Propylacrylat, Propylmethacrylat, Butylacrylat, Butylmethacrylat, 2-Ethylhexylacrylat, Norbornylacrylat, Laurylacrylat, Laurylmethacrylat, Stearylacrylat, Stearylmethacrylat, 2-Propylheptylacrylat, iso-Tridecylmethacrylat oder Dihydrodicyclopentadienylacrylat. Besonders bevorzugt sind Methylacrylat, Methylmethacrylat, Butylacrylat, Butylmethacrylat und 2-Ethylhexylacrylat.

Geeignete Olefine oder Diene sind Ethylen, Propylen und 1,3-Butadien. Geeignete Vinylaromaten sind Styrol, Methylstyrol und Vinyltoluol. Ein geeignetes Vinylhalogenid ist Vinylchlorid.

Am meisten bevorzugte Monomere a) werden ausgewählt aus der Gruppe umfassend Vinylacetat, Vinylester von alpha-verzweigten Monocarbonsäuren mit 5 bis 13 C-Atomen, Methylacrylat, Methylmethacrylat, Butylacrylat, Butylmethacrylat, Styrol, Methylstyrol, Ethylen, Vinylchlorid und Butadien. Am allermeisten bevorzugt sind Styrol, Methylstyrol, Butylacrylat, Methylmethacrylat, Ethylhexylacrylat, VeoVa5R, VeoVa6R, VeoVa7R, Veo-Va8R, VeoVa9R, VeoVa10R und VeoVa11R.

Für Anwendungen von Hybridcopolymer-stabilisierten Basispolymeren im Baubereich, insbesondere in mineralischen Baustoffmassen, sind als Monomere a) Styrol und/oder (Meth)acrylsäureester, wie Butylacrylat, bevorzugt. Für Anwendungen in Klebstoffen, Papierbeschichtungsmitteln oder zur Faserbindung sind als Monomere a) Vinylacetat und die vorgenannten (Meth)Acrylsäureester bevorzugt.

Zusätzlich oder alternativ zu den wasserunlöslichen Monomeren a) sind als Monomere a) auch ethylenisch ungesättigte, kationische Monomere bevorzugt, wie ethylenisch ungesättigte Ammoniumverbindungen oder ethylenisch ungesättigte tertiäre Aminverbindungen.

Ethylenisch ungesättigte tertiäre Aminverbindungen werden ausgewählt aus der Gruppe umfassend 2-Dimethylaminoethylmethacrylat und 3-Dimethylaminopropylmethacrylamid (DMAEMA oder DMAPMA bei pH ≤ 5 protonierte Spezies) sowie N-(1,1-Dimethyl-3-dimethylaminopropyl)acrylamid, N-(1,1-Dimethyl-3-dimethylaminobutyl)acrylamid, N-(1-Methyl-1,3-diphenyl-3-diethyl-aminopropyl)methacrylamid, 1-Vinylimidazol, 1-Vinyl-2-methylimidazol, 1-Vinyl-2-ethylimidazol, 1-Vinyl-2-phenylimidazol, 1-Vinyl-2,3-dimethylimidazol und 1-Vinyl-2,4,5-trimethylimidazol.

Ethylenisch ungesättigte Ammoniumverbindungen werden ausgewählt aus der Gruppe umfassend Diallyldiethylammoniumchlorid (DADEAC), (3-Methacryloxy)propyltrimethylammoniumchlorid (MPTAC),(3-Methacryloxy)ethyltrimethylammoniumchlorid (METAC), (3-Methacrylamido)propyltrimethyl-ammoniumchlorid (MAPTAC), Trimethyl-3-(1-acrylamido-1,1-dimethylpropyl)ammoniumchlorid, Trimethyl-3-(1-acrylamido-1,1-dimethylbutyl)ammoniumchlorid, Dimethylacryl-amidopropyl-4-trimethylammoniumbutenyl-2-ammoniumchlorid, 2-Acrylamidomethoxy)ethyltrimethylammoniumchlorid und insbesondere Diallyldimethylammoniumchlorid (DADMAC).

Besonders bevorzugte kationische Monomere a) sind Diallyldimethylammoniumchlorid (DADMAC), Diallyldi-ethylammoniumchlorid (DADEAC), (3-Methacryloxy)propyltrimethylammoniumchlorid (MPTAC), (3-Methacryloxy)ethyltrimethylammoniumchlorid (METAC) und (3-Methacrylamido)propyltrimethyl-ammoniumchlorid (MAP-TAC).

Als Monomere a) können auch ein oder mehrere wasserunlösliche Monomere und ein oder mehrere kationische Monomere eingesetzt werden. Unter den Monomeren a) sind aber die wasserunlöslichen Monomere bevorzugt. Bevorzugt ist es also, als Monomere a) ausschließlich wasserunlösliche Monomere, bzw. keine kationischen Monomere einzusetzen.

Zur Klarstellung sei erwähnt, dass sich die Monomere a) vorzugsweise von den im Folgenden genannten Silanen b) und/oder insbesondere den weiter unten aufgeführten Hilfsmonomeren unterscheiden.

Zur Herstellung der Hybridcopolymere werden in Stufe A) vorzugsweise 5 bis 80 Gew.-%, besonders bevorzugt 5 bis 75 Gew.-% und am meisten bevorzugt 10 bis 75 Gew.-% Monomere a) eingesetzt, bezogen auf das Gesamtgewicht der bei der Polymerisation in Stufe A) zur Herstellung der Hybridcopolymere insgesamt eingesetzten Mengen an wasserlöslichen Polymeren c) und ethylenisch ungesättigten Monomeren a).

Geeignete Silane b) sind beispielsweise ethylenisch ungesättigte Siliciumverbindungen der allgemeinen Formel R³SiR²₀₋₂(OR⁴)₁₋₃ (2), wobei

R² die Bedeutung C₁- bis C₃-Alkylrest, C₁- bis C₃-Alkoxyrest oder Halogen (beispielsweise Cl oder Br) hat, R die Bedeutung CH₂=CR - (CH₂) ₀₋₁ oder CH₂=CR CO₂ (CH₂)₁₋₃ hat, R ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R⁴ gegebenenfalls durch eine Ethergruppe unterbrochen sein kann, und R⁵ für H oder CH₃ steht.

Bevorzugte Silane b) sind γ-Acryl- bzw. γ-Methacryloxypropyl-tri(alkoxy)silane, α-Methacryloxymethyltri(alkoxy)silane, γ-Methacryloxypropylmethyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen-, Ethoxyethylen-, Methoxypropylenglykolether- bzw. Ethoxypropylenglykolether-Reste eingesetzt werden können. Beispiele für geeignete Siliciumverbindungen sind Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichlorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinylltributoxysilan, Vinyltrihexyloxysilan, Vinylmethoxydihexyloxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Silane.

Beispiele für Mercaptosilane sind 3-Mercaptopropyltrimethoxysilan, 3-Mercaptopropyltriethoxysilan und 3-Mercaptopropylmethyldimethoxysilan.

Als Silane b) werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische, insbesondere Gemische von 2 oder mehreren Silanen aus der Gruppe umfassend von 3-Methacryloxypropyltrimethoxysilan oder Methacryloxymethyltrimethoxysilan mit Vinyltrimethoxysilan und Vinyltriethoxysilan.

Silane b) werden in Stufe A) zu vorzugsweise 0 bis 10 Gew.-%, besonders bevorzugt 0,1 bis 7 Gew.-% und am meisten bevorzugt 1 bis 5 Gew.-% eingesetzt, bezogen auf das Gesamtgewicht der bei der Polymerisation in Stufe A) zur Herstellung der Hybridcopolymere insgesamt eingesetzten Mengen an wasserlöslichen Polymeren c), ethylenisch ungesättigten Monomeren a) und Silanen b).

Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäurenitrile, vorzugsweise Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise, Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Geeignet sind des Weiteren Hydroxypropylcarbamatacrylate, Aminacrylate oder Aminmethacrylate, ungesättigte Fettsäureacrylate oder Glycolacrylate, wie Ethyldiglycolacrylat. Weitere Beispiele sind Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder - methacrylat, Hydroxyethylcaprolactonacrylate sowie Verbindungen wie Diacetonacrylamid oder Acetylacetoxyethylacrylat oder -methacrylat.

Die wasserlöslichen Polymere c) weisen in Wasser bei einer Temperatur zwischen 20°C und 90°C und einem pH-Wert zwischen 3 und 12, insbesondere bei einem pH-Wert zwischen 3 und 9, im Allgemeinen eine Löslichkeit von mindestens 10 g/l auf.

Als wasserlösliche Polymere c) können herkömmliche Schutzkolloide verwendet werden. Beispiele für geeignete wasserlösliche Polymere c) sind Polymere enthaltend Einheiten von Vinylalkohol, Vinylpyrrolidonen, Vinylacetalen, ethylenisch ungesättigten Carbonsäuren, Acrylamiden, Vinylsulfonsäuren, ethylenisch ungesättigten Aminen oder Ammoniumverbindungen oder auch Polymere wie Polysaccharide in wasserlöslicher Form, Proteine, Ligninsulfonate oder Formaldehydsulfonate.

Bevorzugte wasserlösliche Polymere c) sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Cresolformaldehydsulfonate, Styrolmaleinsäure- und Vinylethermaleinsäure-Copolymere.

Bevorzugte Polyvinylalkohole sind auch hydrophob modifizierte Polyvinylalkohole, beispielsweise verseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des hydrophob modifizierten Polyvinylalkohols.

Bei den Polyvinylalkoholen kann es sich auch um kationische Polyvinylalkohole oder anionische Polyvinylalkohole handeln. Kationische Schutzkolloide sind Polymere mit kationischer Ladung; anionische Schutzkolloide sind Polymere mit anionischer Ladung.

Beispiele für kationische Polyvinylalkohole sind Polymere, welche kationische Monomereinheiten enthalten, vorzugsweise Monomereinheiten mit quarternären Ammoniumgruppen, Sulfoniumgruppen und Phosphoniumgruppen. Bevorzugt werden verseifte Copolymerisate von Vinylacetat mit einem oder mehreren kationischen Comonomeren ausgewählt aus der Gruppe umfassend Allyl-Alkyl-Ammoniumhalogenide, (Meth)Acryloxy-Alkyl-Ammoniumhalogenide, (Meth)Acrylamido-Alkyl-Ammoniumhalogenide, Amino-Alkyl-(Meth)Acrylat und Amino-Alkyl-(Meth)Acrylamid, wobei die Alkylreste 1 bis 4 C-Atome enthalten können. Bevorzugte kationische Comonomere werden ausgewählt aus der Gruppe umfassend Diallyldiethylammoniumchlorid (DADEAC), (3-Methacryloxy)propyltrimethylammoniumchlorid (MPTAC),(3-Methacryloxy)ethyltrimethylammoniumchlorid (METAC), (3-Methacrylamido)propyltrimethyl-ammoniumchlorid (MAPTAC), 2-Dimethylaminoethylmethacrylat oder 3-Dimethylaminopropylmethacrylamid (DMAEMA oder DMAPMA bei pH ≤ 5 protonierte Spezies) und insbesondere Diallyldimethylammoniumchlorid (DADMAC). Am meisten bevorzugte Monomere c) sind Diallyldimethylammoniumchlorid (DADMAC), Diallyldi-ethylammoniumchlorid (DADEAC), (3-Methacryloxy)propyltrimethylammoniumchlorid (MPTAC),(3-Methacryloxy)ethyltrimethylammoniumchlorid (METAC), (3-Methacrylamido)propyltrimethyl-ammoniumchlorid (MAPTAC). Die Herstellung von kationischen Polyvinylalkoholen ist beispielsweise in der EP1724288A1 oder in E.W. Flick, Water-Soluble Resins - an Industrial Guide, Noyes Publications, Park Ridge, N.J., 1991 beschrieben.

Der Anteil der kationischen Comonomere beträgt vorzugsweise 0,01 bis 30 Gew.-%, besonders bevorzugt 1 bis 15 Gew.-%, noch mehr bevorzugt 1 bis 10 Gew.-% und am meisten bevorzugt 1 bis 5 Gew.-%, jeweils bezogen auf das Gesamtgewicht der kationischen Polyvinylalkohole.

Beispiele für anionische Polyvinylalkohole sind Polymere, welche anionische Monomereinheiten enthalten, vorzugsweise Monomereinheiten mit Sulfat-, Sulfonsäure-, Phosphat-, Phosphonat- und Carbonsäure-Gruppen oder deren jeweiligen Salze. Besonders bevorzugte anionische Monomereinheiten tragen Phosphat-, Phosphonat- oder insbesondere Sulfonsäure- oder Carbonsäure-Gruppen. Bevorzugt werden verseifte Copolymerisate von Vinylacetat mit einem oder mehreren anionischen Comonomeren ausgewählt aus der Gruppe umfassend Vinylsulfonate, Allylsulfonate, ethylenisch ungesättigte Mono- oder Dicarbonsäuren, Monoester der Fumarsäure und Maleinsäure. Besonders bevorzugt werden Vinylsulfonate und ethylenisch ungesättigte Mono- oder Dicarbonsäuren. Insbesondere bevorzugt werden Vinylsulfonat, 2-Methyl-2-propen-1-sulfonsäure, Allylsulfonat, Acrylsäure, Methacrylsäure, Fumarsäure, Maleinsäure, Monoethyl- oder Monoisopropylester der Fumarsäure oder der Maleinsäure, oder die Salze der vorgenannten Säuren. Am meisten bevorzugt wird Vinylsulfonat. Die Herstellung von anionischen Polyvinylalkoholen ist beispielsweise in der WO06122705A beschrieben.

Der Anteil der anionischen Comonomere beträgt vorzugsweise 0,01 bis 30 Gew.-%, besonders bevorzugt 1 bis 20 Gew.-%, noch mehr bevorzugt 1 bis 15 Gew.-% und am meisten bevorzugt 1 bis 10 Gew.-%, jeweils bezogen auf das Gesamtgewicht der anionischen Polyvinylalkohole.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-%. Der Hydrolysegrad bezeichnet das Molverhältnis aus den Vinylalkohol-Einheiten und der Gesamtsumme aus den Vinylalkohol- und Vinylester-Einheiten des jeweiligen wasserlöslichen Polymers c).

Die Polyvinylalkohole haben eine Höpplerviskosität von vorzugsweise 0,4 bis 30 mPas, besonders bevorzugt 0,4 bis 15 mPas, noch mehr bevorzugt von 0,5 bis 10 mPas und am meisten bevorzugt von 0,8 bis 6 mPas (bestimmt nach der Methode nach Höppler bei 20°C gemäß DIN 53015 in 4 %iger wässriger Lösung).

Polyvinylacetale sind durch teilweise oder vollständige Acetalisierung der teil- oder vollverseiften Polyvinylalkohole erhältlich. Die Herstellung der Polyvinylacetale erfolgt nach gängigen Verfahren durch Acetalisierung der genannten Polyvinylalkohole mit Aldehyden, wie beispielsweise in der DE-A 10140131 beschrieben. Bevorzugt sind Aldehyde aus der Gruppe der aliphatischen Aldehyde mit 1 bis 15 C-Atomen, insbesondere Formaldehyd, Acetaldehyd, Propionaldehyd und am meisten bevorzugt Butyraldehyd oder eine Mischung aus Butyr- und Acetaldehyd. Als aromatische Aldehyde können beispielsweise Benzaldehyd oder dessen Derivate verwendet werden. Der Acetalisierungsgrad der Polyvinylacetale kann durch die eingesetzte Menge an Aldehyd eingestellt werden. Denn da die Acetalisierung mit fast vollständigem Umsatz abläuft, kann die Zugabemenge durch einfache stöchiometrische Rechnung bestimmt werden.

Besonders bevorzugte wasserlösliche Polymere c) sind Polyvinylalkohole, insbesondere auch kationische Polyvinylalkohole oder anionische Polyvinylalkohole.

Bevorzugt ist auch der Einsatz von Gemischen aus mindestens zwei wasserlöslichen Polymeren c), insbesondere mindestens zwei Polyvinylalkoholen. Bevorzugte Gemische von Polyvinylalkohlen enthalten ein oder mehrere hochviskose Polyvinylalkohole mit einer Höpplerviskosität von vorzugsweise größer 8 bis 30 mPas, besonders bevorzugt größer 8 bis 20 mPas und am meisten bevorzugt von größer 8 bis 16 mPas sowie ein oder mehrere niederviskose Polyvinylalkohole mit einer Höpplerviskosität von vorzugsweise 1 bis ≤ 8 mPas und besonders bevorzugt 2 bis 6 mPas (je bestimmt nach der Methode nach Höppler bei 20°C gemäß DIN 53015 in 4 %iger wässriger Lösung). Gemische von Polyvinylalkohlen enthalten vorzugsweise 2 bis 50 Gew.-% an hochviskosen Polyvinylalkoholen und 50 bis 98 Gew.-% an niederviskosen Polyvinylalkoholen, bezogen auf das Trockengewicht des Gemischs der Polyvinylakohole. Mit Gemischen von Polymeren c) kann die Verarbeitbarkeit von Hybridcopolymer-stabilisierte Basispolymere enthaltenden Anwendungsformulierungen verbessert werden.

Die wasserlöslichen Polymere c) werden in Stufe A) zu vorzugsweise 20 bis 95 Gew.-%, besonders bevorzugt 25 bis 95 Gew.-% und am meisten bevorzugt 25 bis 90 Gew.-% eingesetzt, bezogen auf das Gesamtgewicht der bei der Polymerisation in Stufe A) zur Herstellung der Hybridcopolymere insgesamt eingesetzten Mengen an wasserlöslichen Polymeren c) und ethylenisch ungesättigten Monomeren a).

Die in Stufe B) eingesetzten Siliciumverbindungen der Formel (1) tragen als Reste R vorzugsweise unsubstituierte Reste. Besonders bevorzugt steht der Rest R der Formel (1) für Methyl, Ethyl oder Propyl, Cyclohexyl, Phenyl, am meisten bevorzugt für Methyl oder Ethyl.

Vorzugsweise steht der Rest R¹ für einen Alkyl- oder Arylrest, besonders bevorzugt für Methyl, Ethyl, Propyl, Cyclohexyl, Isooctyl oder Phenyl und am meisten bevorzugt für Methyl oder Ethyl.

Vorzugsweise nimmt n einen Wert von 2 bis 4, besonders bevorzugt den Wert 3 oder 4 an.

Beispiele für Silane der Formel (1) sind Tetramethoxysilan, Tetraethoxysilan, Methyltrimethoxysilan, Methyltriethoxysilan, Dimethyldimethoxysilan, Dimethyldiethoxysilan, Isooctyltrimethoxysilan, Isooctyltriethoxysilan, (Cyclohexyl)methyldimethoxysilan, Dicyclopentyldimethoxysilan oder Phenyltriethoxysilan. Bevorzugte Silane der Formel (1) sind Tetramethoxysilan, Tetraethoxysilan, Methyltrimethoxysilan, Methyltriethoxysilan, Isooctyltrimethoxysilan, Isooctyltriethoxysilan oder Phenyltriethoxysilan. Besonders bevorzugt sind Tetramethoxysilan, Tetraethoxysilan, Methyltrimethoxysilan, Methyltriethoxysilan. Am meisten bevorzugt sind Tetramethoxysilan und Tetraethoxysilan.

Bei den Kondensationsprodukten von Siliciumverbindungen der Formel (1) handelt es sich vorzugsweise um Organopolysiloxane, die aus Einheiten der allgemeinen Formel

R¹ₓSi (OR) _{y}O_{(4-x-y)/2} (3)

aufgebaut sind, worin
x 0, 1, 2 oder 3 und y 0, 1 oder 2 ist,
mit der Maßgabe, dass die Summe x+y≤3 ist,
R¹ gleich oder verschieden sein kann und die oben für die Formel (1) angegebenen Bedeutungen annehmen kann, und
R gleich oder verschieden sein kann und die oben für die Formel (1) angegebenen Bedeutungen annehmen kann.

Als Reste R bzw. R¹ sind dieselben Reste bevorzugt, besonders bevorzugt und am meisten bevorzugt, die oben für die Formel (1) entsprechend aufgeführt sind.

Der Einsatz von Siliciumverbindungen der Formel (1) oder (3) mit einem oder mehreren Resten R¹ ist besonders geeignet, um die Hybridcopolymere bzw. die mit Hybridcopolymeren stabilisierten Basispolymere oder deren Anwendungsprodukte zusätzlich mit hydrophoben Eigenschaften auszustatten. Deswegen ist insbesondere der Einsatz von Isooctyltrimethoxysilan, Isooctyltriethoxysilan, (Cyclohexyl)methyldimethoxysilan, Dicyclopentyldimethoxysilan oder Phenyltriethoxysilan besonders bevorzugt. Der Anteil der Siliciumverbindungen der Formel (1) und/oder (3), die einen oder mehrere Reste R¹ enthalten, beträgt vorzugsweise 0 bis 10 Gew.-%, besonders bevorzugt 0,1 bis 10 Gew.-% und am meisten bevorzugt 1 bis 3 Gew.-%, jeweils bezogen auf die Gesamtmasse der insgesamt eingesetzten Siliciumverbindungen der Formeln (1) und (3).

Die Siliciumverbindungen der Formeln (1) und (3) sind handelsübliche Produkte oder nach gängigen Methoden herstellbar, wie beispielsweise in Noll, Chemie und Technologie der Silikone, 2. Auflage 1968, Weinheim, oder in Houben-Weyl, Methoden der organischen Chemie, Band E20, Georg Thieme Verlag, Stuttgart (1987) beschrieben.

Bei der Kondensation in Stufe B) werden vorzugsweise 0,1 bis 20 Gew.-%, besonders bevorzugt 1 bis 17 Gew.-% und am meisten bevorzugt 5 bis 15 Gew.-% Siliciumverbindungen der Formeln (1) und/oder (3) eingesetzt, bezogen auf das Trockengewicht der Hybridcopolymere der Stufe B).

Die Hybridcopolyere der Stufe B) basieren vorzugsweise auf 20 bis 70 Gew.-%, besonders bevorzugt 30 bis 60 Gew.-% und am meisten bevorzugt 35 bis 50 Gew.-% wasserlöslichen Polymeren c). Die Gesamtmenge an Siliciumverbindungen der Formeln (1) und/oder (3) und Monomeren a) und sowie gegebenenfalls Silanen b) beträgt vorzugsweise 30 bis 80 Gew.-%, besonders bevorzugt 40 bis 70 Gew.-% und am meisten bevorzugt 50 bis 65 Gew.-%.

Die Angaben in Gew.-% beziehen sich hierbei jeweils auf die Trockenmasse der Hybridcopolymere, die in Stufe Stufe B) erhalten werden.

Siliciumverbindungen der Formeln (1) und/oder (3) werden in Stufe B) zu) vorzugsweise 5 bis 40 Gew.-%, besonders bevorzugt 10 bis 30 Gew.-% und am meisten bevorzugt 15 bis 30 Gew.-% eingesetzt. Die Hybridcopolyere der Stufe B) basieren vorzugsweise auf vorzugsweise 50 bis 90 Gew.-%, besonders bevorzugt 60 bis 85 Gew.-% und am meisten bevorzugt 70 bis 80 Gew.-% Monomeren a). Die Angaben in Gew.-% beziehen sich hierbei auf die Siliciumverbindungen der Formeln (1) und (3) und die Monomere a) und gegebenenfalls die Silane b).

In den Hybridcopolymeren haben die Polymer-Einheiten basierend auf den Monomeren a), gegebenenfalls den Silanen b) sowie gegebenenfalls den Siliciumverbindungen der Formeln (1) und/oder (3) mittlere Teilchengrößen von vorzugsweise 10 nm bis 200 nm, besonders bevorzugt von 30 nm bis 150 nm und am meisten bevorzugt von 40 nm bis 100 nm (Bestimmung mittels Beckmann Coulter).

Die Hybridcopolymere der Stufe B) verfügen überraschenderweise über eine besonders hohe Thermostabilität. Der Einsatz der Hybridcopolymere der Stufe B) als Schutzkolloide für die Basispolymere ist insbesondere bei deren Anwendung in mineralischen Baustoffmassen besonders geeignet. Dadurch werden besonders stabile und widerstandsfähige Baustoffprodukte erhalten.

Die Hybridcopolymere der Stufe A) können beispielsweise mittels Emulsionspolymerisation von einem oder mehreren ethylenisch ungesättigten Monomeren a) und gegebenenfalls einem oder mehreren Silanen b) in Gegenwart von ein oder mehreren wasserlöslichen Polymeren c) hergestellt werden. Vorzugsweise erfolgt also keine Suspensionspolymerisation. Die Polymerisationstemperatur ist vorzugsweise zwischen 40°C und 100°C, besonders bevorzugt zwischen 60°C und 90°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Polymerisation erfolgt üblicherweise in Wasser, gegebenenfalls im Gemisch mit einem oder mehreren organischen Lösungsmitteln, wie Alkoholen mit 1 bis 7 C-Atomen. Beispiele für Alkohole sind Methanol, Ethanol, Propanol, Butanol oder Pentanol. Vorzugsweise beträgt der Anteil von Wasser, bezogen auf das Gesamtgewicht der organischen Lösungsmittel und Wasser ≥ 50 Gew.-%, besonders bevorzugt ≥ 90 Gew.-% und am meisten bevorzugt 100 Gew.-%.

Zur Initiierung der Polymerisation können die für die Emulsionspolymerisation gebräuchlichen wasserlöslichen bzw. monomerlöslichen Initiatoren oder Redox-Initiator-Kombinationen eingesetzt werden; vorzugsweise wird auf Redox-Initiator-Kombinationen verzichtet. Beispiele für wasserlösliche Initiatoren sind die Wasserstoffperoxid, t-Butylperoxid, t-Butylhydroperoxid, Kaliumperoxodiphosphat, tert.-Butyl peroxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid oder vorzugsweise (Erd)alkali oder Ammoniumsalze, wie Natrium-, Kalium- und Ammoniumsalze, der Peroxodischwefelsäure. Insbesondere die Salze der Peroxodischwefelsäure führen schließlich zu Basisdispersionen bzw. deren Pulver mit besonders hoher Lagerstabilität bzw. Redispergierbarkeit.

Die Konzentration der wasserlöslichen Polymere c) beträgt vorzugsweise 25 bis 95, besonders bevorzugt 30 bis 90 und am meisten bevorzugt 30 bis 80 Gew.-%, jeweils bezogen auf das Gesamtgewicht der wasserlöslichen Polymere c), der wasserunlöslichen Monomere a) und gegebenenfalls der Silane b). Diese Konzentrationen führen zu besonders stabilen Hybridcopolymeren bzw. besonders stabilen Hybridcopolymer-stabilisierten Polymeren, insbesondere im Falle von wässrigen Dispersionen oder Redispersionen.

Die genannten Initiatoren werden im Allgemeinen in einer Menge von 0,1 bis 5,0 Gew.-%, vorzugsweise 0,2 bis 2,0 Gew.-%, jeweils bezogen auf das Gesamtgewicht der Monomere, eingesetzt.

Vorzugsweise werden > 20%, besonders bevorzugt ≥ 30%, mehr bevorzugt ≥ 40% und noch mehr bevorzugt ≥ 50% der Initiatoren vorgelegt, bezogen auf das Gesamtgewicht der in Stufe A) eingesetzten Initiatoren. Während der Polymerisation werden vorzugsweise ≤ 80%, mehr bevorzugt ≤ 60% und noch mehr bevorzugt ≤ 10% Initiatoren zudosiert, bezogen auf das Gesamtgewicht der in Stufe A) eingesetzten Initiatoren. Am meisten bevorzugt werden während der Polymerisation keine Initiatoren zudosiert. Nach vollständiger Zugabe der Monomere können zur Nachpolymerisation aber zusätzliche Mengen an Initiatoren zugesetzt werden.

Als Redox-Initiatoren verwendet man Kombinationen aus den genannten Initiatoren und Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsaure. Die Reduktionsmittelmenge beträgt im Allgemeinen 0,001 bis 0,03 Gew.-%, vorzugsweise 0,001 bis 0,015 Gew.-%, jeweils bezogen auf das Gesamtgewicht der Monomere.

Die wasserlöslichen Polymere c) können ganz oder teilweise dosiert werden oder vorzugsweise vollständig vorgelegt werden. Vorzugsweise werden mindestens 50 Gew.-%, besonders bevorzugt werden mindestens 60 Gew.-% und am meisten bevorzugt mindestens 80 Gew.-% der wasserlöslichen Polymere c) vorgelegt, jeweils bezogen auf die insgesamt eingesetzte Menge an wasserlöslichen Polymeren c).

Vorzugsweise sind ≥ 50 Gew.-%, besonders bevorzugt ≥ 60 Gew.-%, noch mehr bevorzugt ≥ 70 Gew.-% und am meisten bevorzugt ≥ 80 Gew.-% der insgesamt eingesetzten Menge an wasserlöslichen Polymeren c) zu einem Zeitpunkt vorgelegt oder zudosiert, zu dem ≤ 60 Gew.-%, vorzugsweise ≤ 50 Gew.-%, besonders bevorzugt ≤ 40 Gew.-% und am meisten bevorzugt ≤ 30 Gew.-% der insgesamt eingesetzten Mengen an ethylenisch ungesättigten Monomeren a) und Silanen b) vorgelegt oder zudosiert sind.

Die Monomere a) und die Silane b) können insgesamt vorgelegt oder vorzugsweise vollständig zudosiert werden. Vorzugsweise wird so vorgegangen, dass 0 bis 20 Gew.-%, insbesondere 0 bis 10 Gew.-%, bezogen auf das Gesamtgewicht, der Monomere a) und der Silane b) vorgelegt und die verbleibende Restmenge an Monomeren a) und Silanen b) zu einem späteren Zeitpunkt während der Polymerisation zudosiert wird. Die Dosierungen können separat (räumlich und zeitlich) durchgeführt werden.

Die Silane b) werden vorzugsweise ganz oder teilweise dosiert, wenn bis zu 80 Gew.-%, insbesondere 30 bis 70 Gew.-% der wasserunlöslichen Monomere a) vorgelegt oder zudosiert sind, bezogen auf das Gesamtgewicht der in Stufe A) insgesamt eingesetzten wasserlöslichen Monomere a). Damit kann beispielsweise die Bindekraft und die mechanische Festigkeit erfindungsgemäßer Anwendungsprodukte gesteigert werden.

Die bevorzugten Dosierungen bzw. Vorlage, der Komponenten a), b) oder insbesondere c) sind besonders zweckdienlich, um eine besonders starke und zudem gleichmäßige oder homogene Verknüpfung der unterschiedlichen Bestandteile der Hybridcopolymere zu bewirken.

Während der Polymerisation können zusätzlich Emulgatoren zugegen sein. Wird die Polymerisation in Gegenwart von Emulgatoren durchgeführt, beträgt deren Menge vorzugsweise 1 bis 5 Gew.-% bezogen auf das Gewicht der Monomere a) und b). Vorzugsweise wird in Abwesenheit von Emulgatoren polymerisiert. Beispiele für Emulgatoren sind anionische, kationische, amphotere, polymerisierbare oder nichtionische Emulgatoren, wie anionische Tenside, insbesondere Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Zur Steuerung des Molekulargewichts bzw. der Viskosität können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren a) und gegebenenfalls b), eingesetzt und separat oder auch vorgemischt mit Reaktionskomponenten dosiert. Beispiele solcher Substanzen sind n-Dodecylmercaptan, tert.-Dodecylmercaptan, Mercaptopropionsau re, Mercaptopropionsauremethylester, Isopropanol und Acetaldehyd.

Der pH-Wert der so erhaltenen Dispersionen beträgt vorzugsweise 2 bis 10, besonders bevorzugt 4 bis 7 und am meisten bevorzugt 4 bis 6.

Die Kondensation der Stufe B) zur Herstellung von Hybridcopolymeren erfolgt vorzugsweise in demselben Lösungsmittel, in dem Stufe A) ausgeführt wurde, also insbesondere in Wasser als einzigem Lösungsmittel.

Die Siliciumverbindungen der Formeln (1) bzw. (3) oder die Produkte der Stufe A) können in reiner Form oder vorzugsweise in Wasser eingesetzt werden. Die Produkte der Stufe A) können in Wasser vorgelegt werden und die Siliciumverbindungen der Formeln (1) bzw. (3) können in reiner Form ganz oder teilweise während der Kondensation zugegeben werden. Alternativ kann ein Teil der Siliciumverbindungen der Formeln (1), (3) bzw. der Produkte der Stufe A) für die Kondensation vorgelegt werden, und der verbleibende Rest der Siliciumverbindungen der Formeln (1), (3) bzw. der Produkte der Stufe A) kann während der Kondensation zugegeben werden.

Vorzugsweise werden die Siliciumverbindungen der Formeln (1) bzw. (3) und die Produkte der Stufe A) in Wasser für die Kondensation vollständig vorgelegt.

Die Temperatur während der Kondensation beträgt beispielsweise bei 10 bis 100° C, bevorzugt bei 20 bis 80° C, besonders bevorzugt bei 30 bis 70° C und am meisten bevorzugt 40 bis 60° C. Die Kondensation erfolgt vorzugsweise bei Umgebungsdruck, d.h. um 1 atm. Die Reaktionszeit der Kondensation beträgt vorzugsweise 1 bis 19 Stunden, besonders bevorzugt 2 bis 7 Stunden. Der pH-Wert während der Kondensation liegt vorzugsweise ≥ 5, vorzugsweise zwischen 6 und 11 und besonders bevorzugt zwischen 7 und 10. Die Einstellung des pH-Wertes kann mit den gängigen organischen wie anorganischen Säuren, Basen oder Puffer erfolgen.

Durch die Kondensation erfolgt vorzugsweise eine Selbstkondensation von Siliciumverbindungen der Formel (1) bzw. von deren Kondensationsprodukten unter Ausbildung von Si-O-Si-Bindungen. Des Weiteren erfolgt vorzugsweise eine Fixierung, insbesondere eine Kondensation, der Produkte der Stufe A) mit Siliciumverbindungen der Formeln (1) und/oder (3) oder mit deren Kondensationsprodukten.

Flüchtige Beiprodukte der Stufen A) bzw. B) können mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Direkt in Anschluss der Polymerisation kann zur Restmonomerentfernung in Anwendung bekannter Methoden auch nachpolymerisiert werden, im Allgemeinen durch mit Redoxkatalysator initiierter Nachpolymerisation.

Die so erhältlichen Hybridcopolymere der Stufen A) und/oder B) haben einen Feststoffgehalt in Wasser von vorzugsweise ≤ 40%, besonders bevorzugt 10 bis 35%, noch mehr bevorzugt 15 bis 30% und am meisten bevorzugt 18 bis 25%. Die genannte Obergrenze ist besonders vorteilhaft, um besonders stabile, nicht zur Gelierung neigende Hybricopolymer-stabilisierte Basispolymere zu erhalten.

Zur Herstellung von Hybridcopolymeren mit einem Feststoffgehalt in Wasser von 15 bis 25 Gew.-%, insbesondere von 18 bis 22 Gew.-% werden wasserlösliche Polymere c) mit einer Höpplerviskosität von vorzugsweise 0,4 bis kleiner 10 mPas und besonders bevorzugt 0,5 bis 10 mPas eingesetzt. Zur Herstellung von Hybridcopolymeren mit einem Feststoffgehalt in Wasser von < 15 Gew.-%, wie 5 bis 15 Gew.-%, insbesondere 5 bis 10 Gew.-%, werden bei der Polymerisation wasserlösliche Polymere c) mit einer Höpplerviskosität von vorzugsweise ≥ 10 mPas, besonders bevorzugt 10 bis 30 mPas und am meisten bevorzugt 11 bis 20 mPas eingesetzt. Die Bestimmung der Höpplerviskosität erfolgt hierbei jeweils nach der Methode gemäß DIN 53015 bei 20°C in 4 %iger wässriger Lösung.

Die Hybridcopolymere können in Feststoffe, insbesondere in Wasser redispergierbare Pulver überführt werden. Hierzu können wässrige Dispersionen der Hybridcopolymere, vorzugsweise ohne Zusatz von Trocknungshilfsmitteln, das heißt vorzugsweise ohne Zusatz der oben genannten wasserlöslichen Polymeren nach Durchführung der Stufe A bzw. B, getrocknet werden, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstaubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C gewählt.

Zur Erhöhung der Lagerfähigkeit durch Verbesserung der Verblockungsstabilität kann das erhaltene Pulver mit Antiblockmittel (Antibackmittel) ausgerüstet werden. Vorzugsweise enthalten die Hybridcopolymere in Form von Pulvern 2 bis 10 Gew.-% Antiblockmittel, bezogen auf das Trockengewicht der Hybridcopolymere. Besonders bevorzugt wird jedoch auf die Zugabe von Antiblockmittel verzichtet. Beispiele für Antiblockmittel sind Ca- bzw. Mg-Carbonat, Talk, Gips, Kieselsäure, Kaoline, Metakaolin, kalziniertes Kaolin, Silicate mit Teilchengrößen vorzugsweise im Bereich von 10 nm bis 100 µm.

Die Basispolymere basieren auf einem oder mehreren ethylenisch ungesättigten Monomeren beispielsweise ausgewählt aus der Gruppe umfassend die oben genannten Monomere a), b) und die Hilfsmonomere, wobei dieselben Monomere bevorzugt, besonders bevorzugt und am meisten bevorzugt sind wie oben angegeben.

Beispiele für als Basispolymere geeignete Homo- oder Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9R, Veo-Va1OR, VeoVa11R; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 5 bis 13 C-Atomen, sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten können; Mischpolymerisate mit Vinylacetat, 1 bis 40 Gew.-% Ethylen und 1 bis 60 Gew.-% Vinylchlorid; wobei die Polymerisate jeweils noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Basispolymere kann mittels radikalisch initiierter Polymerisation der ethylenisch ungesättigten Monomere erfolgen wie beispielsweise in der DE-A 102006050336 beschrieben, vorzugsweise nach Emulsionspolymerisationsverfahren in wässrigem Medium. Als Schutzkolloide können hierbei die oben genannten wasserlöslichen Polymere c) oder die erfindungsgemäßen Hybridcopolymere dienen.

Die Basispolymere fallen hierbei im Allgemeinen in Form von wässrigen Dispersionen an. Emulgator-stabilisierte Dispersionen haben beispielsweise eine mittlere Teilchengröße von 50 bis 300 nm. Schutzkolloid-stabilisierte, insbesondere Hybridcopolymer-stabilisierte Dispersionen haben mittlere Teilchengrößen von vorzugsweise 300 nm bis 2000 nm und besonders bevorzugt von 500 bis 1500 nm. Die Bestimmung der Teilchengrößen erfolgt jeweils mittels Beckmann Coulter.

Zur Herstellung der Basispolymere in Form von in Wasser redispergierbaren Pulvern werden die wässrigen Dispersionen nach Zusatz von erfindungsgemäßen Hybridcopolymeren als Trocknungshilfsmittel getrocknet. Hierbei können die oben für die Trocknung der Hybridcopolymer-Dispersionen beschriebenen Methoden zur Anwendung kommen. In der Regel wird die Trocknungshilfe in einer Gesamtmenge von 3 bis 30 Gew.-%, bezogen auf die polymeren Bestandteile der Dispersion, eingesetzt. Bevorzugt werden 5 bis 20 Gew.-% bezogen auf den Polymeranteil eingesetzt.

Bei der Verdüsung zur Trocknung wässriger Polymerdispersionen der Basispolymere hat sich vielfach ein Gehalt von bis zu 3 Gew.-% Antischaummittel, bezogen auf das Basispolymer, als günstig erwiesen. Das erhaltene Polymerpulver kann mit einem Antiblockmittel (Antibackmittel) ausgestattet werden, vorzugsweise bis 30 Gew.-%, insbesondere bis 20 Gew.-% oder bis 15 Gew.-%, bezogen auf das Gesamtgewicht polymerer Bestandteile. Hierfür sind beispielsweise die oben genannten Antiblockmittel geeignet.

Zur Verbesserung der anwendungstechnischen Eigenschaften können bei der Trocknung weitere Zusätze zugegeben werden. Weitere, in bevorzugten Ausführungsformen enthaltene Bestandteile von Dispersionspulverzusammensetzungen sind beispielsweise Pigmente, Füllstoffe, Schaumstabilisatoren, Hydrophobierungsmittel oder Zementverflüssiger.

Die Basispolymere in Form von in Wasser redispergierbaren Pulvern haben mittlere Teilchengrößen von vorzugsweise 20 µm bis 300 µm und besonders bevorzugt von 40 µm bis 200 µm (Bestimmung mittels Beckmann Coulter).

Das Einbringen der Hybridcopolymere in die Zusammensetzungen enthaltend die Basispolymere kann auf unterschiedliche Weisen erfolgen. So können die Hybridcopolymere teilweise vor der Initiierung der Polymerisation zur Herstellung der Basispolymere vorgelegt werden. Alternativ dazu können die Hybridcopolymere teilweise während der Polymerisation bei der Herstellung der Basispolymere zugegeben werden. Hybridcopolymere werden zur entsprechenden Polymerdispersion der Basispolymere zugegeben; d.h. vorzugsweise werden zuerst Basispolymere mittels Polymerisation hergestellt und anschließend Hybridcopolymere zugegeben; d.h. die Hybridcopolymere werden vorzugsweise nach der Polymerisation zur Herstellung der Basispolymere zugegeben. Besonders bevorzugt erfolgt die Zugabe der Hybridcopolymere vor der Trocknung der Basispolymerdispersionen, beispielsweise in Form einer Lösung oder eines Pulvers. Dazu werden im Allgemeinen ein oder mehrere Hybridcopolymere den wässrigen Dispersionen der Basispolymere zugegeben, um anschließend die so erhaltenen Mischungen entsprechend der oben ausgeführten Verfahren zu trocknen.

In einer alternativen besonders bevorzugten Ausführungsform können ein oder mehrere Hybridcopolymere auch während der Trocknung der wässrigen Basispolymerdispersionen zugegeben werden.

Hybridcopolymere werden zur Herstellung der Basispolymere in Form von in Wasser redispergierbaren Pulvern verwendet, und hierbei als Trocknungshilfe bei der Trocknung der Basispolymerdispersionen eingebracht. Es handelt sich also um Hybricopolymer-stabilisierte Basispolymere.

Die wässrigen Dispersionen oder die in Wasser redispergierbaren Pulver der Basispolymere enthalten vorzugsweise 1 bis 50 Gew.-%, besonders bevorzugt 2 bis 30 Gew.-%, noch mehr bevorzugt 2 bis 15 Gew.-% und am meisten bevorzugt 2 bis 10 Gew.-% Hybridcopolymere, bezogen auf das Trockengewicht der wässrigen Dispersionen oder der in Wasser redispergierbaren Pulver der Basispolymere.

Sonstige, von den Hybridcopolymeren verschiedene Schutzkolloide, wie wasserlösliche Polymere c), sind in den wässrigen Dispersionen oder den in Wasser redispergierbaren Pulvern der Basispolymere zu vorzugsweise 1 bis 30 Gew.-%, besonders bevorzugt 2 bis 15 Gew.-% und am meisten bevorzugt 2 bis 10 Gew.-% enthalten, bezogen auf das Trockengewicht der wässrigen Dispersionen oder der in Wasser redispergierbaren Pulver der Basispolymere. Alternativ kann bei der Herstellung der Basispolymere in Form von wässrigen Dispersionen oder in Wasser redispergierbaren Pulvern auf den Einsatz von sonstigen, von den Hybridcopolymeren verschiedenen Schutzkolloiden auch vollkommen verzichtet werden.

Der Einsatz der erfindungsgemäßen Hybridcopolymere als Schutzkolloide führt zu entsprechenden wässrigen Dispersionen bzw. Polymerpulvern von Basispolymeren mit hervorragender Lagerstabilität. Polymerpulver zeichnen sich zudem durch eine hohe Blockfestigkeit und hervorragende Redispergierbarkeit in Wasser aus. Überraschenderweise werden diese Effekte auch schon bei geringeren Einsatzmengen an Hybridcopolymeren erzielt als den für herkömmliche Schutzkolloide üblichen Einsatzmengen- und dies obwohl der Anteil der wasserlöslichen Polymere c) in den Hybridcopolymeren geringer ist als in den herkömmlichen Schutzkolloiden.

Auf wasserunlöslichen Monomeren a) basierende erfindungsgemäße Hybridcopolymere führen bei erfindungsgemäßem Einsatz als Schutzkolloide zu Polymerdispersionen und insbesondere zu Polymerpulvern, die auch unter feuchten oder sogar feuchtwarmen Bedingungen lagerstabil sind. Entsprechende Polymerpulver sind auch weniger hygroskopisch im Vergleich zu herkömmlichen Dispersionspulvern. Die hohe Lagerstabilität war gerade auch im Falle der Hybridcopolymere, die Einheiten von wasserunlöslichen Monomeren a) enthalten, besonders überraschend, da Polymere von wasserunlöslichen Monomeren als vollkommen ungeeignet für eine Anwendung als Schutzkolloid angesehen werden. Deswegen wäre zu erwarten gewesen, dass im Falle von wasserunlöslichen Monomeren a) enthaltenden Hybridcopolymeren der Einsatz größerer Mengen an Schutzkolloiden erforderlich wäre als bei Einsatz herkömmlicher Schutzkolloide. Überraschenderweise wurde aber das Gegenteil festgestellt. Der Einsatz von erfindungsgemäß stabilisierten Basispolymeren führt im Falle von Hybridcopolymeren, die auch auf wasserunlöslichen Monomeren a) basieren, zu Anwendungsprodukten mit hoher Wasserbeständigkeit.

Der Einsatz von ethylenisch ungesättigten, kationischen Monomeren als Monomere a) führt schließlich zu Hybridcopolymeren, die bei erfindungsgemäßem Einsatz als Schutzkolloid besonders verseifungsstabile Produkte ergeben.

Die erfindungsgemäßen Hybridcopolymere haben gänzlich andere Eigenschaften als herkömmliche Schutzkolloide. So verfilmen wässrige Lösungen von herkömmlichen Schutzkolloiden vollständig. Dahingegen werden nach Trocknung von wässrigen Lösungen der Hybricopolymere Partikel und somit keine Filme erhalten. Des Weiteren sind die Hybridcopolymeren in fester Form in Wasser vollständig redisperbierbar. Die Hybridcopolymere zeichnen sich auch durch eine ionische Stabilität aus.

Die erfindungsgemäßen Basispolymere in Form in Wasser redispergierbaren Pulvern eignen sich insbesondere zum Einsatz in bauchemischen Produkten. Sie können alleine oder in Kombination mit herkömmlichen Polymerdispersionen oder Dispersionspulvern eingesetzt werden, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas für die Herstellung von Verlaufsmassen, Bauklebern, Putzen, Spachtelmassen, Fugenmörteln, Dichtschlämmen oder Farben. Unter Bauklebern sind Fliesenkleber oder Vollwärmeschutzkleber bevorzugte Einsatzgebiete der Dispersionspulverzusammensetzungen. Des Weiteren können die Hybridcopolymer stabilisierten Basispolymere für die Herstellung von Formkörpern oder als Zusatz für Farben, Klebstoffe, Textile oder Papierbeschichtungen eingesetzt werden.

Vorteilhafter Weise besitzen Baustoffmassen, die erfindungsgemäß Hybridcopolymer-stabilisierte Basispolymere enthalten, vorteilhafte Verarbeitungseigenschaften, wie rheologische Eigenschaften oder die gewünschte offene Zeit.

Die folgenden Beispiele dienen der detaillierten Erläuterung der Erfindung und sind in keiner Weise als Einschränkung zu verstehen.

Die Brookfield-Viskositäten wurden jeweils mit einem Brookfieldviskosimeter bei 20 Umdrehungen und 23°C bestimmt. Die Teilchengrößen der Hybridcopolymere wurden mittels Beckmann Coulter ermittelt.

### Herstellung der Hybridcopolymere:

### Beispiel 1:

In einem thermostatisierten Laborreaktor mit 3,0 Liter Füllvolumen wurden unter Stickstoff 2.202 g einer 12,6 %-igen wässrigen Lösung des Polyvinylalkohols Mowiol 4-88 (Handelsname der Firma Kuraray; Höpplerviskosität von 4 mPas, Verseifungsgrad 88) mit 1,11 g Kaliumperoxodisulfat (KPS) vorgelegt und unter Rühren auf 80°C aufgeheizt. Bei Erreichen von 80°C wurden 277,5 g Styrol innerhalb von 100 Minuten kontinuierlich in den Reaktor zudosiert. 30 Minuten nach Ende der Dosierung von Styrol wurden 20 g KPS-Lösung (3%-ig in Wasser) zugegeben und 90 Minuten bei 80°C nachpolymerisiert. Anschließend wurde die Polymerdispersion auf Raumtemperatur abgekühlt. Die Polymerdispersion hatte einen Feststoffgehalt von 22,1% und eine Brookfield-Viskosität von 780 mPa.s. Die Teilchengröße betrug 75 nm.

### Beispiel 2:

Wie Beispiel 1, mit dem Unterschied, dass an Stelle von 277,5 g Styrol 249,5 g Styrol und zusätzlich 140 g einer 20%-igen wässrigen Lösung von Diallyldimethylammoniumchlorid (DADMAC) zudosiert wurden.

Die so erhaltene Polymerdispersion hatte einen Feststoffgehalt von 21,2% und eine Brookfield-Viskosität von 520 mPa.s. Die Teilchengröße betrug 70 nm.

### Beispiel 3:

In einem thermostatisierten Laborreaktor mit 3,0 Liter Füllvolumen wurden unter Stickstoff 2500 g einer 20,0 %-igen wässrigen Lösung des Polyvinylalkohol Mowiol 4-88 mit 1,3 g Kaliumperoxodisulfat (KPS) vorgelegt und unter Rühren auf 80°C aufgeheizt. Bei Erreichen von 80°C wurden 163,0 g einer 50%-igen wässrigen Lösung von Diallyldimethylammoniumchlorid (DADMAC) innerhalb von 80 Minuten kontinuierlich in den Reaktor zudosiert.

30 Minuten nach Ende der Dosierung von DADMAC wurden 20 g KPS-Lösung (3%-ig in Wasser) zugegeben und 90 Minuten bei 80°C nachpolymerisiert. Anschließend wurde die Polymerlösung auf Raumtemperatur abgekühlt. Die Polymerdispersion hatte einen Feststoffgehalt von 21,8% und eine Brookfield-Viskosität von 208 mPa.s.

### Beispiel 4:

Wie Beispiel 3, mit dem Unterschied, dass neben Mowiol 4-88 zusätzlich Mowiol 13-88 (Handelsname der Firma Kuraray; Höpplerviskosität von 13 mPas, Verseifungsgrad von 88) eingesetzt wurde und das nach der Polymerisation erhaltene Hybridcopolymer auf 42 Gew.-% Mowiol 4-88 und 28 Gew.-% Mowiol 13-88 sowie 30 Gew.-% Styrol basierte.

Die so erhaltene Polymerdispersion hatte einen Feststoffgehalt von 21,9% und eine Brookfield-Viskosität von 2.200 mPa.s. Die Teilchengröße betrug 78 nm.

### Beispiel 5:

Wie Beispiel 3, mit dem Unterschied, dass anstatt der Polyvinylalkohollösung Mowiol 4-88 ein vollverseifter kationischer Polyvinylalkohol mit einer Höpplerviskosität von 4,1 mPa.s eingesetzt wurde. Der vollverseifte kationische Polyvinylalkohol wurde hergestellt, wie in der US 2006/0264572 A1 beschrieben, wobei Vinylacetat mit 3 Gew.-% Diallyldimethylammoniumchlorid (DADMAC) copolymerisiert und anschließend verseift wurde.

Die so erhaltene Polymerdispersion hatte einen Feststoffgehalt von 22,3% und eine Brookfield-Viskosität von 980 mPa.s. Die Teilchengröße betrug 79 nm.

### Beispiel 6:

Wie Beispiel 3 aber mit dem Unterschied, dass anstatt der Polyvinylalkohollösung Mowiol 4-88 ein vollverseifter anionischer Polyvinylalkohol mit einer Höpplerviskosität von 4,0 mPa.s verwendet wurde. Der vollverseifte anionische Polyvinylalkohol wurde hergestellt, wie in der WO 2006/122705 A1 beschrieben, wobei Vinylacetat mit 3 Gew.-% des 2-Methyl-2-propen-1-sulfonsäure Nasalzes copolymerisiert und verseift wurde.

Die so erhaltene Polymerdispersion hatte einen Feststoffgehalt von 22,0% und eine Brookfield-Viskosität von 900 mPa.s. Die Teilchengröße betrug 74 nm.

### Beispiel 7:

Wie Beispiel 1, mit dem Unterschied, dass an Stelle von 277,5 g Styrol 269,2 g Styrol und zusätzlich 8,3 g Vinyltriethoxysilan (GENIOSIL GF 56, Handelsname Wacker Chemie) zudosiert wurden.

Die so erhaltene Polymerdispersion hatte einen Feststoffgehalt von 21,9% und eine Brookfield-Viskosität von 890 mPa.s. Die Teilchengröße betrug 88 nm.

### Beispiel 8:

Zu der 2000g in Beispiel 7 erhaltenen Polymerdispersion wurden bei 50°C 195 g Silicasol (Bindzil 2040, Festgehalt von 41%) zugegeben, und anschließend wurde für 3 Stunden bei dieser Temperatur gerührt.

Die so erhaltene Polymerdispersion hatte einen Feststoffgehalt von 23,5%. Die Teilchengröße betrug 98 nm.

### Redispergierverhalten von Hybridcopolymeren nach Verfilmung:

Aus den Polymerdispersionen der Beispiele 1 bis 8 wurden auf Glasplatten jeweils 0,2 mm dicke Filme hergestellt und diese für 24 Stunden bei Raumtemperatur und 15 Minuten bei 105°C getrocknet.

Anschließend wurde zur Überprüfung der Redispergierbarkeit mit einer Pipette jeweils ein Wassertropfen bei Raumtemperatur auf eine homogene Stelle des zu prüfenden Filmes aufgebracht. Nach 60 Sekunden Einwirkzeit bei Raumtemperatur wurde der Wassertropfen mit der Fingerkuppe so lange an der gleichen Stelle verrieben, bis die Glasplatte an dieser Stelle filmfrei war, der Film in Filmstücke zerfiel oder vollständig erhalten blieb.

Die Redispergierbarkeit der Hybridcopolymer-Filme wurde mit folgendem Bewertungsschema beurteilt:
- Note 1:: Film lässt sich durch leichtes Reiben sofort vollständig redispergieren oder redispergiert bereits selbständig;
- Note 2:: Film lässt sich durch Reiben redispergieren, kaum Filmstücke gebildet;
- Note 3:: Film lässt sich nur durch kräftiges Reiben unter Bildung von Filmstücken redispergieren;
- Note 4:: Film lässt sich auch durch längeres kräftiges Reiben nicht redispergieren, sondern zerfällt in Filmstücke.

Die Ergebnisse der Austestung sind in Tabelle 1 aufgeführt.

**Tabelle 1:**

| Hybridcopolymer | Bewertung der Redispergierbarkeit der Hybridcopolymer-Filme |
|---|---|
| Bsp-1 | 1 |
| Bsp-2 | 1 |
| Bsp-3 | 1 |
| Bsp-4 | 1 |
| Bsp-5 | 1 |
| Bsp-6 | 1 |
| Bsp-7 | 2 |
| Bsp-8 | 2 |

### Herstellung der redispergierbaren Pulver (DPP) mittels Sprühtrocknung:

Zur Herstellung von redispergierbaren Pulvern (DPP) wurde eine wässrige Polyvinylalkohol-stabilisierte Ethylen-Vinylacetat-Copolymerdispersion (Basisdispersion) mit einer Glasübergangstemperatur Tg von -7°C und einem Feststoffgehalt von 53% verwendet. Der darin enthaltene Polyvinylalkohol hatte eine Höppler-Viskosität von 5 mPa·s und einen Hydrolysegrad von 88 Mol%. Als Trocknungshilfsmittel wurde der in Tabelle 2 angegebene Hilfsstoff in der dort angegebenen Menge eingesetzt.

Die jeweilige Polymerdispersion wurde mittels einer Zweistoffdüse versprüht. Als Verdüsungskomponente dienten 4 bar Druckluft, die gebildeten Tropfen wurden mit auf 125°C erhitzter Luft im Gleichstrom getrocknet. Das trockene Polymerpulver wurde mit 3 Gew.-% handelsüblichem Antiblockmittel (Kaolin) versetzt.

**Tabelle 2:**

| DPP | Hilfsstoff | Hilfsstoff-Menge [%]^{b)} | Blocktest [Note] | Verarbeitbarkeit |
|---|---|---|---|---|
| V-DPP1 | M 04/88^{a)} | 10,0% | 2 | 10 min |
| V-DPP2 | M 04/88^{a)} | 7,0% | 4 | 20 min |
| DPP-1 | Bsp-1 | 7,0% | 2 | 1,0 Stunden |
| DPP-2 | Bsp-2 | 7,0% | 3 | 1,5 Stunden |
| DPP-3 | Bsp-3 | 7,0% | 1 | 2,0 Stunden |
| DPP-4 | Bsp-4 | 7,0% | 2 | 1,0 Stunden |
| DPP-5 | Bsp-5 | 7,0% | 1 | 1,5 Stunden |
| DPP-6 | Bsp-6 | 7,0% | 1 | 1,5 Stunden |
| DPP-7 | Bsp-7 | 7,0% | 2 | 1,0 Stunden |
| DPP-8 | Bsp-8 | 7,0% | 2 | 1,0 Stunden |

| | | | | |
|---|---|---|---|---|
| a): Mowiol 04/88 (Handelsbezeichnung der Firma Kuraray): Polyvinylalkohol mit einer Höpplerviskosität von 4 mPas, einem Verseifungsgrad von 88 Mol-%; als wässrige Lösung mit einem Festgehalt von 20% eingesetzt; b): Anteil an Hilfsstoff, bezogen auf das Trockengewicht des Polymerpulvers. | | | | |

### Bestimmung der Blockfestigkeit der Pulver (Blocktest):

Zur Bestimmung der Blockfestigkeit wurde das jeweilige Dispersionspulver in ein Eisenrohr (Durchmesser: 5 cm) mit Verschraubung gefüllt und danach mit einem Metallstempel (Gewicht: 3 kg) belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulvers bestimmt. Die Blockstabilität wurde wie folgt klassifiziert:
1 = sehr gute Blockstabilität;
2 = gute Blockstabilität;
3 = befriedigende Blockstabilität;
4 = nicht blockstabil, Pulver nach Zerdrücken nicht mehr rieselfähig.

Die Prüfergebnisse sind in Tabelle 2 in der Spalte "Blocktest" zusammengefasst.

Bestimmung der Zementstabilität (Verarbeitbarkeit):
Es wurde eine Zementmischung der nachfolgenden Rezeptur angerührt:

| | |
|---|---|
| Portlandzement | 82,5 g |
| Calcit (CaCO₃) 10-40 mm | 75,0 g |
| Quarzsand 200-500 mm | 75,0 g |
| ggf. Dispersionspulver (DPP) | 15,0 g |
| ggf. Polyvinylalkohol M 04/88 | 15,0 g |
| Wasser | 85,0 g |

Die Verarbeitbarkeit der Zementmischung wurde über einen Zeitraum von zwei Stunden beobachtet und qualitativ beurteilt. In der Spalte "Verarbeitbarkeit" der Tabelle 2 ist der Zeitraum angegeben, innerhalb dessen die jeweilige Zementmischung gut verarbeitbar war.

Die Prüfergebnisse sind in Tabelle 2 in der Spalte "Verarbeitbarkeit" aufgeführt.

Herstellung und Austestung von Mörtel:
Die in Tabelle 3 aufgeführten Bestandteile des jeweiligen Mörtels wurden in den dort genannten Mengen mit Wasser bei Raumtemperatur angerührt.

Für die Austestung wurde der jeweilige Mörtel als Armierungsmörtel in einer Schichtdicke von 4 mm bei Raumtemperatur auf EPS-Platten /expanded polystyrene) aufgetragen.

Nach Aushärtung der Armierungsmörtelschicht und Lagerung der Testkörper wurden die Haftzugfestigkeit sowie der Ausriss auf EPS-Platten gemäß Prüfmethode DIN 18555-6 bestimmt. Es wurde unter folgenden Bedingungen gelagert:
- 14 Tage bei Normalklima bei 23°C und 50% relativer Feuchte (14d NK);
- 12 Tage bei Normalklima und anschließend zwei Tage Wasserlagerung bei 23°C (12d NK+2d H₂O).

Die Testergebnisse sind in der Tabelle 3 zusammengefasst. Die Ergebnisse zeigen, dass die erfindungsgemäß modifizierten Mörtel bessere Haftzugwerte und EPS-Ausriss ergeben als die Mörtel der Vergleichsbeispiele (V-Mörtel-1 und V-Mörtel-2).

**Tabelle 3: Herstellung und Austestunq der Mörtel:**

| Bestandteile [Gew.-T] | Mörtel-1 | Mörtel-2 | Mörtel-3 | Mörtel-4 | Mörtel-5 | Mörtel-6 | Mörtel-7 | Mörtel-8 | V-Mörtel-1 | V-Mörtel-2 |
|---|---|---|---|---|---|---|---|---|---|---|
| Weißzement 42,5 [Gew.-T] | 130 | 130 | 130 | 130 | 130 | 130 | 130 | 130 | 130 | 130 |
| Edelkalkhydrat [Gew.-T] | 40 | 40 | 40 | 40 | 40 | 40 | 40 | 40 | 40 | 40 |
| Quarzsand AKW 9a [Gew.-T] | 520 | 520 | 520 | 520 | 520 | 520 | 520 | 520 | 520 | 520 |
| Calciumcarbonat MHS [Gew.-T] | 283,5 | 283,5 | 283,5 | 283,5 | 283,5 | 283,5 | 283,5 | 283,5 | 283,5 | 283,5 |
| Celluloseether [Gew.-T] | 1,5 | 1,5 | 1,5 | 1,5 | 1,5 | 1,5 | 1,5 | 1,5 | 1,5 | 1,5 |
| DPP-1 [Gew.-T] | 25 | | | | | | | | | |
| DPP-2 [Gew.-T] | | 25 | | | | | | | | |
| DPP-3 [Gew.-T] | | | 25 | | | | | | | |
| DPP-4 [Gew.-T] | | | | 25 | | | | | | |
| DPP-5 [Gew.-T] | | | | | 25 | | | | | |
| DPP-6 [Gew.-T] | | | | | | 25 | | | | |
| DPP-7 [Gew.-T] | | | | | | | 25 | | | |
| DPP-8 [Gew.-T] | | | | | | | | 25 | | |
| V-DPP1 [Gew.-T] | | | | | | | | | 25 | |
| V-DPP2 [Gew.-T] | | | | | | | | | | 25 |
| Wasser [ml / 1 kg Trockenmörtel] | 250 | 250 | 250 | 250 | 250 | 250 | 250 | 250 | 250 | 250 |
| | | | | | | | | | | |

| **Testergebnisse:** | | | | | | | | | | |
|---|---|---|---|---|---|---|---|---|---|---|
| Haftzug (14d NK) [N/mm²] | 0, 13 | 0, 13 | 0,12 | 0,13 | 0,12 | 0,12 | 0,12 | 0,13 | 0,11 | 0,10 |
| Haftzug (12d NK+2d H₂O) [N/mm²] | 0,10 | 0,10 | 0, 09 | 0,10 | 0,09 | 0, 09 | 0,09 | 0,10 | 0,08 | 0, 07 |
| EPS-Ausriss (14d NK) [%] | 90 | 100 | 95 | 100 | 95 | 90 | 95 | 100 | 80 | 70 |
| EPS-Ausriss% (12d NK+2d H₂O) [%] | 75 | 85 | 80 | 85 | 75 | 75 | 80 | 85 | 60 | 50 |

## Patentansprüche

1. Verwendung von Hybridcopolymeren als Schutzkolloide zur Herstellung von Polymeren auf Basis ethylenisch ungesättigter Monomere (Basispolymere) in Form von in Wasser redispergierbaren Pulvern, **dadurch gekennzeichnet, dass** Hybridcopolymere als Trocknungshilfsmittel zu Basispolymeren in Form von wässrigen Dispersionen gegeben werden und die so erhaltenen Mischungen anschließend getrocknet werden,
wobei die Hybridcopolymere erhältlich sind durch
A) radikalisch initiierte Polymerisation von einem oder mehreren ethylenisch ungesättigten Monomeren a) ausgewählt aus der Gruppe bestehend aus Vinylacetat, Vinylpropionat, Vinylbutyrat, Vinyl-2-ethylhexanoat, Vinyllaurat, 1-Methylvinylacetat, Vinylpivalat, Vinylester von alpha-verzweigten Monocarbonsäuren mit 5 bis 13 C-Atomen,
Methylacrylat, Methylmethacrylat, Ethylacrylat, Ethylmethacrylat, Propylacrylat, Propylmethacrylat, Butylacrylat, Butylmethacrylat, 2-Ethylhexylacrylat, Norbornylacrylat, Laurylacrylat, Laurylmethacrylat, Stearylacrylat, Stearylmethacrylat, 2-Propylheptylacrylat, iso-Tridecylmethacrylat, Dihydrodicyclopentadienylacrylat, Ethylen, Propylen, 1,3-Butadien, Styrol, Methylstyrol, Vinyltoluol, Vinylchlorid,
2-Dimethylaminoethylmethacrylat, 3-Dimethylaminopropylmethacrylamid, N-(1,1-Dimethyl-3-dimethylaminopropyl)acrylamid, N-(1,1-Dimethyl-3-dimethylaminobutyl)acrylamid, N-(1-Methyl-1,3-diphenyl-3-diethylaminopropyl)methacrylamid, 1-Vinylimidazol, 1-Vinyl-2-methylimidazol, 1-Vinyl-2-ethylimidazol, 1-Vinyl-2-phenylimidazol, 1-Vinyl-2,3-dimethylimidazol, 1-Vinyl-2,4,5-trimethylimidazol,
Diallyldiethylammoniumchlorid, (3-Methacryloxy)propyltrimethylammoniumchlorid, (3-Methacryloxy)ethyltrimethylammoniumchlorid, (3-Methacrylamido)propyltrimethyl-ammoniumchlorid, Trimethyl-3-(1-acrylamido-1,1-dimethylpropyl)ammoniumchlorid, Trimethyl-3-(1-acrylamido-1,1-dimethylbutyl)ammoniumchlorid, Dimethylacryl-amidopropyl-4-trimethylammoniumbutenyl-2-ammoniumchlorid, 2-Acrylamidomethoxy)ethyltrimethylammoniumchlorid und Diallyldimethylammoniumchlorid, und gegebenenfalls einem oder mehreren Silanen b) ausgewählt aus der Gruppe der ethylenisch ungesättigten Silane und Mercaptosilane
in Gegenwart von einem oder mehreren wasserlöslichen Polymeren c),
wobei die wasserlöslichen Polymere c) in Stufe A) zu 20 bis 95 Gew.-% eingesetzt werden, bezogen auf das Gesamtgewicht der bei der Polymerisation in Stufe A) eingesetzten Menge an wasserlöslichen Polymeren c) und ethylenisch ungesättigten Monomeren a),
und gegebenenfalls
B) Kondensation von einer oder mehreren Siliciumverbindungen der allgemeinen Formel (RO)ₙSiR¹₄₋ₙ(1) oder von einem oder mehreren Kondensationsprodukten der Formel (1), wobei
R einen gegebenenfalls substituierten Alkyl- oder Arylrest mit 1 bis 20 Kohlenstoffatomen oder ein Wasserstoffatom,
R¹ einen gegebenenfalls substituierten Kohlenwasserstoffrest oder ein Wasserstoffatom bedeutet, und
n einen Wert von 1 bis 4 annimmt.

2. Verwendung von Hybridcopolymeren als Schutzkolloide gemäß Anspruch 1, **dadurch gekennzeichnet, dass** als ethylenisch ungesättigte Monomere a) ein oder mehrere wasserunlösliche ethylenisch ungesättigte Monomere ausgewählt werden, deren Homopolymere unter Normalbedingungen nach DIN50014 eine Löslichkeit in Wasser von < 10 g/l haben.

3. Verwendung von Hybridcopolymeren als Schutzkolloide gemäß Anspruch 1, **dadurch gekennzeichnet, dass** als ethylenisch ungesättigte Monomere a) ein oder mehrere ethylenisch ungesättigte, kationische Monomere ausgewählt werden.

4. Verwendung von Hybridcopolymeren als Schutzkolloide gemäß Anspruch 1 bis 3, **dadurch gekennzeichnet, dass** als ethylenisch ungesättigte Silane b) ein oder mehrere ethylenisch ungesättigte Siliciumverbindungen der allgemeinen Formel R³SiR²₀₋₂(OR⁴)₁₋₃ (2) ausgewählt werden, wobei
R² die Bedeutung C₁- bis C₃-Alkylrest, C₁- bis C₃-Alkoxyrest oder Halogen hat,
R³ die Bedeutung CH₂=CR³-(CH₂)₀₋₁ oder CH₂=CR⁵CO₂(CH₂)₁₋₃ hat, 4
R ein unverzweigter oder verzweigter, gegebenenfalls substituierter Alkylrest mit 1 bis 12 C-Atomen ist oder ein Acylrest mit 2 bis 12 C-Atomen ist, wobei R⁴ gegebenenfalls durch eine Ethergruppe unterbrochen sein kann, und
R⁵ für H oder CH₃ steht.

5. Verwendung von Hybridcopolymeren als Schutzkolloide gemäß Anspruch 1 bis 4, **dadurch gekennzeichnet, dass** ein oder mehrere wasserlösliche Polymere c) ausgewählt werde aus der Gruppe umfassend Polysaccharide in wasserlöslicher Form, Proteine, Ligninsulfonate, Formaldehydsulfonate und Polymere mit Einheiten von Vinylalkohol, Vinylpyrrolidonen, Vinylacetalen, ethylenisch ungesättigten Carbonsäuren, Acrylamiden, Vinylsulfonsäuren, ethylenisch ungesättigten Aminen oder Ammoniumverbindungen.

6. Verwendung von Hybridcopolymeren als Schutzkolloide gemäß Anspruch 1 bis 5, **dadurch gekennzeichnet, dass** als wasserlösliche Polymere c) ein oder mehrere Polyvinylalkohole, insbesondere ein oder mehrere hydrophob modifizierte Polyvinylalkohole, kationische Polyvinylalkohole oder anionische Polyvinylalkohole, ausgewählt werden.

7. Verwendung von Hybridcopolymeren als Schutzkolloide gemäß Anspruch 1 bis 6, **dadurch gekennzeichnet, dass** zur Herstellung der Hybridcopolymere der Stufe A) 5 bis 80 Gew.-% Monomere a) eingesetzt werden, bezogen auf das Gesamtgewicht der bei der Polymerisation in Stufe A) zur Herstellung der Hybridcopolymere insgesamt eingesetzten Mengen an wasserlöslichen Polymeren c) und ethylenisch ungesättigten Monomeren a).

8. Verwendung von Hybridcopolymeren als Schutzkolloide gemäß Anspruch 1 bis 7, **dadurch gekennzeichnet, dass** bei der Herstellung der Hybridcopolymere in Stufe A) ≥ 50 Gew.-% der insgesamt eingesetzten Menge an wasserlöslichen Polymeren c) zu einem Zeitpunkt vorgelegt oder zudosiert sind, zu dem ≤ 60 Gew.-% der insgesamt eingesetzten Mengen an ethylenisch ungesättigten Monomeren a) und Silanen b) vorgelegt oder zudosiert sind.

9. Verwendung von Hybridcopolymeren als Schutzkolloide gemäß Anspruch 1 bis 8, **dadurch gekennzeichnet, dass** zur Herstellung der Hybridcopolymere der Stufe A) 0 bis 20 Gew.-% der ethylenisch ungesättigten Monomere a) und der Silane b) vor Initiierung der Polymerisation vorgelegt werden, bezogen auf das Gesamtgewicht der insgesamt eingesetzten Menge an ethylenisch ungesättigten Monomere a) und Silanen b).

10. Verwendung von Hybridcopolymeren als Schutzkolloide gemäß Anspruch 1 bis 9, **dadurch gekennzeichnet, dass** ein oder mehrere Basispolymere auf einem oder mehreren ethylenisch ungesättigten Monomeren basieren ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine, Diene, Vinylaromaten, Vinylhalogenide und ethylenisch ungesättigte Silane.

11. Verwendung von Hybridcopolymeren als Schutzkolloide für Polymere auf Basis ethylenisch ungesättigter Monomere (Basispolymere) gemäß Anspruch 1 bis 10, **dadurch gekennzeichnet, dass**
die Basispolymere durch radikalisch initiierte Polymerisation von ethylenisch ungesättigten Monomeren hergestellt werden und
ein oder mehrere Hybridcopolymere nach der Herstellung der Basispolymere durch Polymerisation zugegeben werden; oder ein oder mehrere Hybridcopolymere vor, während oder nach der Trocknung wässriger Dispersionen von Basispolymeren zugegeben werden.

12. Verwendung von Hybridcopolymeren als Schutzkolloide gemäß Anspruch 1 bis 11, **dadurch gekennzeichnet, dass** die Hybridcopolymer stabilisierten Basispolymere in bauchemischen Produkten oder für die Herstellung von Formkörpern oder als Zusatz für Farben, Klebstoffe, Textile oder Papierbeschichtungsmittel eingesetzt werden.

## Claims

1. Use of hybrid copolymers as protective colloids for preparation of polymers based on ethylenically unsaturated monomers (base polymers) in the form of water-redispersible powders, **characterized in that** hybrid copolymers are added as a drying aid to base polymers in the form of aqueous dispersions and the mixtures thus obtained are then dried,
wherein the hybrid copolymers are obtainable by
A) free-radically initiated polymerization of one or more ethylenically unsaturated monomers a) selected from the group consisting of vinyl acetate, vinyl propionate, vinyl butyrate, vinyl 2-ethylhexanoate, vinyl laurate, 1-methylvinyl acetate, vinyl pivalate, vinyl esters of alpha-branched monocarboxylic acids having 5 to 13 carbon atoms,
methyl acrylate, methyl methacrylate, ethyl acrylate, ethyl methacrylate, propyl acrylate, propyl methacrylate, butyl acrylate, butyl methacrylate, 2-ethylhexyl acrylate, norbornyl acrylate, lauryl acrylate, lauryl methacrylate, stearyl acrylate, stearyl methacrylate, 2-propylheptyl acrylate, isotridecyl methacrylate, dihydrodicyclopentadienyl acrylate, ethylene, propylene, 1,3-butadiene, styrene, methylstyrene, vinyltoluene, vinyl chloride, 2-dimethylaminoethyl methacrylate, 3-dimethylaminopropyl-methacrylamide, N-(1,1-dimethyl-3-dimethylaminopropyl)-acrylamide, N-(1,1-dimethyl-3-dimethylaminobutyl)-acrylamide, N-(1-methyl-1,3-diphenyl-3-diethylaminopropyl)methacrylamide, 1-vinylimidazole, 1-vinyl-2-methylimidazole, 1-vinyl-2-ethylimidazole, 1-vinyl-2-phenylimidazole, 1-vinyl-2,3-dimethylimidazole, 1-vinyl-2,4,5-trimethylimidazole, diallyldiethylammonium chloride, (3-methacryloyloxy)propyltrimethylammonium chloride, (3-methacryloyloxy)ethyltrimethylammonium chloride, (3-methacrylamido)propyltrimethylammonium chloride, trimethyl-3-(1-acrylamido-1,1-dimethyl-propyl)ammonium chloride, trimethyl-3-(1-acrylamido-1,1-dimethylbutyl)ammonium chloride, dimethylacrylamido-propyl-4-trimethylammoniobutenyl-2-ammonium chloride, 2-acrylamidomethoxy)ethyltrimethylammonium chloride and diallyldimethylammonium chloride, and
optionally one or more silanes b) selected from the group of the ethylenically unsaturated silanes and mercaptosilanes
in the presence of one or more water-soluble polymers c),
using the water-soluble polymers c) in stage A) to an extent of 20% to 95% by weight, based on the total weight of the amount of water-soluble polymers c) and ethylenically unsaturated monomers a) used in the polymerization,
and optionally
B) condensation of one or more silicon compounds of the general formula (RO)ₙSiR¹₄₋ₙ (1) or of one or more condensation products of the formula (1), where
R is an optionally substituted alkyl or aryl radical having 1 to 20 carbon atoms or a hydrogen atom,
R¹ is an optionally substituted hydrocarbyl radical or a hydrogen atom, and
n assumes a value from 1 to 4.

2. Use of hybrid copolymers as protective colloids according to Claim 1, **characterized in that** the ethylenically unsaturated monomers a) selected are one or more water-insoluble ethylenically unsaturated monomers that have homopolymers having a solubility in water of < 10 g/l under standard conditions to DIN50014.

3. Use of hybrid copolymers as protective colloids according to Claim 1, **characterized in that** the ethylenically unsaturated monomers a) selected are one or more ethylenically unsaturated cationic monomers.

4. Use of hybrid copolymers as protective colloids according to Claims 1 to 3, **characterized in that** the ethylenically unsaturated silanes b) selected are one or more ethylenically unsaturated silicon compounds of the general formula R3SiR²₀₋₂ (OR⁴) ₁₋₃ (2) where
R² is defined as C₁- to C₃-alkyl radical, C₁- to C₃-alkoxy radical or halogen,
R³ is defined as CH₂=CR³-(CH₂) ₀₋₁ or CH₂=CR⁵CO₂(CH₂)₁₋₃,
R⁴ is an unbranched or branched, optionally substituted alkyl radical having 1 to 12 carbon atoms or an acyl radical having 2 to 12 carbon atoms, where R⁴ may optionally be interrupted by an ether group, and
R⁵ is H or CH₃.

5. Use of hybrid copolymers as protective colloids according to Claims 1 to 4, **characterized in that** one or more water-soluble polymers c) are selected from the group comprising polysaccharides in water-soluble form, proteins, lignosulfonates, formaldehydesulfonates and polymers having units of vinyl alcohol, vinylpyrrolidones, vinyl acetals, ethylenically unsaturated carboxylic acids, acrylamides, vinylsulfonic acids, ethylenically unsaturated amines and ammonium compounds.

6. Use of hybrid copolymers as protective colloids according to Claims 1 to 5, **characterized in that** the water-soluble polymers c) selected are one or more polyvinyl alcohols, especially one or more hydrophobically modified polyvinyl alcohols, cationic polyvinyl alcohols or anionic polyvinyl alcohols.

7. Use of hybrid copolymers as protective colloids according to Claims 1 to 6, **characterized in that** the hybrid copolymers in stage A) are prepared using 5% by weight to 80% by weight of monomers a), based on the total weight of the amounts of water-soluble polymers c) and ethylenically unsaturated monomers a) used overall in the polymerization in stage A) for preparation of the hybrid copolymers.

8. Use of hybrid copolymers as protective colloids according to Claims 1 to 7, **characterized in that**, in the preparation of the hybrid copolymers in stage A), ≥ 50% by weight of the total amount of water-soluble polymers c) used has been initially charged or metered in at a time at which ≤ 60% by weight of the total amounts of ethylenically unsaturated monomers a) and silanes b) used have been initially charged or metered in.

9. Use of hybrid copolymers as protective colloids according to Claims 1 to 8, **characterized in that** the hybrid copolymers in stage A) are prepared by initially charging 0% to 20% by weight of the ethylenically unsaturated monomers a) and the silanes b) prior to the initiation of the polymerization, based on the total weight of the amount of ethylenically unsaturated monomers a) and silanes b) used overall.

10. Use of hybrid copolymers as protective colloids according to Claims 1 to 9, **characterized in that** one or more base polymers are based on one or more ethylenically unsaturated monomers selected from the group comprising vinyl esters of carboxylic acids having 1 to 15 carbon atoms, methacrylates or acrylates of carboxylic acids with branched or unbranched alcohols having 1 to 15 carbon atoms, olefins, dienes, vinylaromatics, vinyl halides and ethylenically unsaturated silanes.

11. Use of hybrid copolymers as protective colloids for polymers based on ethylenically unsaturated monomers (base polymers) according to Claims 1 to 10, **characterized in that**
the base polymers are prepared by free-radically initiated polymerization of ethylenically unsaturated monomers and
one or more hybrid copolymers are added after the preparation of the base polymers by polymerization; or
one or more hybrid copolymers are added before, during or after the drying of aqueous dispersions of base polymers.

12. Use of hybrid copolymers as protective colloids according to Claims 1 to 11, **characterized in that** the hybrid copolymer-stabilized base polymers are used in construction chemical products or for the production of moldings or as an additive for paints, adhesives, textiles or paper coating compositions.

## Revendications

1. Utilisation de copolymères hybrides comme colloïdes de protection pour la préparation de polymères à base de monomères éthyléniquement insaturés (polymères de base) sous forme de poudres redispersibles dans l'eau, **caractérisée en ce que** les copolymères hybrides sont ajoutés comme adjuvants de dessiccation aux polymères de base sous forme de dispersions aqueuses et les mélanges ainsi obtenus sont ensuite séchés, les copolymères hybrides pouvant être obtenus par
A) polymérisation initiée par voie radicalaire d'un ou de plusieurs monomères a) éthyléniquement insaturés, choisis dans le groupe constitué par l'acétate de vinyle, le propionate de vinyle, le butyrate de vinyle, le 2-éthylhexanoate de vinyle, le laurate de vinyle, l'acétate de 1-méthylvinyle, le pivalate de vinyle, les esters vinyliques d'acides monocarboxyliques ramifiés en position alpha comprenant 5 à 13 atomes de carbone, l'acrylate de méthyle, le méthacrylate de méthyle, l'acrylate d'éthyle, le méthacrylate d'éthyle, l'acrylate de propyle, le méthacrylate de propyle, l'acrylate de butyle, le méthacrylate de butyle, l'acrylate de 2-éthylhexyle, l'acrylate de norbornyle, l'acrylate de lauryle, le méthacrylate de lauryle, l'acrylate de stéaryle, le méthacrylate de stéaryle, l'acrylate de 2-propylheptyle, le méthacrylate d'isotridécyle, l'acrylate de dihydrodicyclopentadiényle, l'éthylène, le propylène, le 1,3-butadiène, le styrène, le méthylstyrène, le vinyltoluène, le chlorure de vinyle, le méthacrylate de 2-diméthylaminoéthyle, le 3-diméthylaminopropylméthacrylamide, le N-(1,1-diméthyl-3-diméthylaminopropyl)acrylamide, le N-(1,1-diméthyl-3-diméthylaminobutyl)acrylamide, le N-(1-méthyl-1,3-diphényl-3-diéthylaminopropyl)méthacrylamide, le 1-vinylimidazole, 1-vinyl-2-méthylimidazole, le 1-vinyl-2-éthylimidazole, le 1-vinyl-2-phénylimidazole, le 1-vinyl-2,3-diméthylimidazole, le 1-vinyl-2,4,5-triméthylimidazole, le chlorure de diallyldiéthylammonium, le chlorure de (3-méthacryloxy)propyltriméthylammonium, le chlorure de (3-méthacryloxy)éthyltriméthylammonium, le chlorure de (3-méthacrylamido)propyltriméthylammonium, le chlorure de triméthyl-3-(1-acrylamido-1,1-diméthylpropyl)ammonium, le chlorure de triméthyl-3-(1-acrylamido-1,1-diméthylbutyl)ammonium, le chlorure de diméthylacrylamidopropyl-4-triméthylammoniumbutényl-2-ammonium, le chlorure de 2-acrylamidométhoxy)éthyltriméthylammonium et le chlorure de diallyldiméthylammonium, et le cas échéant d'un ou de plusieurs silanes b) choisis dans le groupe des silanes et des mercaptosilanes éthyléniquement insaturés, en présence d'un ou de plusieurs polymères c) solubles dans l'eau, les polymères c) solubles dans l'eau étant utilisés dans l'étape A) à raison de 20 à 95% en poids, par rapport au poids total de la quantité de polymères c) solubles dans l'eau et de monomères a) éthyléniquement insaturés utilisés lors de la polymérisation dans l'étape A) et le cas échéant
B) condensation d'un ou de plusieurs composés du silicium de formule générale (RO)ₙSiR¹₄₋ₙ (1) ou d'un ou de plusieurs produits de condensation de formule (1), dans laquelle
R signifie un radical alkyle ou aryle le cas échéant substitué comprenant 1 à 20 atomes de carbone ou un atome d'hydrogène,
R¹ signifie un radical hydrocarboné le cas échéant substitué ou un atome d'hydrogène et
n représente une valeur de 1 à 4.

2. Utilisation de copolymères hybrides comme colloïdes de protection selon la revendication 1, **caractérisée en ce qu'**on choisit, comme monomères a) éthyléniquement insaturés, un ou plusieurs monomères éthyléniquement insaturés, insolubles dans l'eau, dont les homopolymères présentent, dans des conditions normales selon la norme DIN 50014, une solubilité dans l'eau < 10 g/l.

3. Utilisation de copolymères hybrides comme colloïdes de protection selon la revendication 1, **caractérisée en ce qu'**on choisit, comme monomères a) éthyléniquement insaturés, un ou plusieurs monomères éthyléniquement insaturés, cationiques.

4. Utilisation de copolymères hybrides comme colloïdes de protection selon la revendication 1 à 3, **caractérisée en ce qu'**on choisit, comme silanes b) éthyléniquement insaturés, un ou plusieurs composés du silicium éthyléniquement insaturés de formule générale R³SiR¹₀₋₂(OR⁴)₁₋₃ (2), dans laquelle
R² signifie un radical C₁-C₃-alkyle, C₁-C₃-alcoxy ou halogène,
R³ signifie CH₂=CR³-(CH₂)₀₋₁ ou CH₂=CR⁵CO₂(CH₂)₁₋₃,
R⁴ représente un radical alkyle non ramifié ou ramifié, le cas échéant substitué, comprenant 1 à 12 atomes de carbone ou un radical acyle comprenant 2 à 12 atomes de carbone, R⁴ pouvant le cas échéant être interrompu par un groupe éther, et
R⁵ représente H ou CH₃.

5. Utilisation de copolymères hybrides comme colloïdes de protection selon la revendication 1 à 4, **caractérisée en ce qu'**un ou plusieurs polymères c) solubles dans l'eau sont choisis dans le groupe comprenant les polysaccharides sous forme soluble dans l'eau, les protéines, les sulfonates de lignine, les sulfonates de formaldéhyde et les polymères présentant des unités d'alcool vinylique, des vinylpyrrolidones, des vinylacétals, des acides carboxyliques éthyléniquement insaturés, des acrylamides, des acides vinylsulfoniques, des amines éthyléniquement insaturées ou des composés d'ammonium.

6. Utilisation de copolymères hybrides comme colloïdes de protection selon la revendication 1 à 5, **caractérisée en ce qu'**on choisit comme polymères c) solubles dans l'eau un ou plusieurs poly(alcools vinyliques), en particulier un ou plusieurs poly(alcools vinyliques) modifiés de manière hydrophobe, un ou plusieurs poly(alcools vinyliques) cationiques ou un ou plusieurs poly(alcools vinyliques) anioniques.

7. Utilisation de copolymères hybrides comme colloïdes de protection selon la revendication 1 à 6, **caractérisée en ce qu'**on utilise, pour la préparation des copolymères hybrides de l'étape A), 5 à 80% en poids de monomères a), par rapport au poids total des quantités, utilisées au total dans la polymérisation dans l'étape pour la préparation des copolymères hybrides, de polymères c) solubles dans l'eau et de monomères a) éthyléniquement insaturés.

8. Utilisation de copolymères hybrides comme colloïdes de protection selon la revendication 1 à 7, **caractérisée en ce que** lors de la préparation des copolymères hybrides dans l'étape A), ≥ 50% en poids de la quantité utilisée au total de polymères c) solubles dans l'eau sont disposés au préalable ou sont ajoutés en dosant à un moment donné, dans lesquels ≤ 60% en poids des quantités utilisées au total de monomères a) éthyléniquement insaturés et de silanes b) sont disposés au préalable ou dosés.

9. Utilisation de copolymères hybrides comme colloïdes de protection selon la revendication 1 à 8, **caractérisée en ce qu'**on dispose au préalable, pour la préparation des copolymères hybrides de l'étape A), 0 à 20% en poids des monomères a) éthyléniquement insaturés et des silanes b) avant l'initiation de la polymérisation, par rapport au poids total des quantités utilisées au total de monomères a) éthyléniquement insaturés et de silanes b).

10. Utilisation de copolymères hybrides comme colloïdes de protection selon la revendication 1 à 9, **caractérisée en ce qu'**un ou plusieurs polymères de base sont à base d'un ou de plusieurs monomères éthyléniquement insaturés choisis dans le groupe comprenant les esters vinyliques d'acide carboxylique comprenant 1 à 15 atomes de carbone, les esters de l'acide méthacrylique ou de l'acide acrylique d'acides carboxyliques avec des alcools non ramifiés ou ramifiés comprenant 1 à 15 atomes de carbone, les oléfines, les diènes, les aromatiques de vinyle, les halogénures de vinyle et les silanes éthyléniquement insaturés.

11. Utilisation de copolymères hybrides comme colloïdes de protection pour des polymères à base de monomères éthyléniquement insaturés (polymères de base) selon la revendication 1 à 10, **caractérisée en ce que** les polymères de base sont préparés par polymérisation initiée par voie radicalaire de monomères éthyléniquement insaturés et un ou plusieurs copolymères hybrides sont ajoutés après la préparation des polymères de base par polymérisation ; ou un ou plusieurs copolymères hybrides sont ajoutés avant, pendant ou après le séchage de dispersions aqueuses de polymères de base.

12. Utilisation de copolymères hybrides comme colloïdes de protection selon la revendication 1 à 11, **caractérisée en ce que** les polymères de base stabilisés par des copolymères hybrides sont utilisés dans les produits chimiques de construction ou pour la production de corps façonnés ou comme additif pour des encres, des adhésifs, des textiles ou des agents de revêtement de papier.
